(19) Europäisches Patentamt
European Patent Office
Office européen des brevets

(11) EP 0 985 682 B1

(12) **FASCICULE DE BREVET EUROPEEN**

(45) Date de publication et mention de la délivrance du brevet:
**07.12.2005 Bulletin 2005/49**

(51) Int Cl.[7]: **C08B 15/10**, C07B 57/00

(21) Numéro de dépôt: **99402204.4**

(22) Date de dépôt: **07.09.1999**

(54) **Polymères réticules à base de dérivés bissilanes, bis-thioéthers, bis-sulfoxydes, bis-sulfones et butane DI-YL de polysaccharides et d'oligosaccharides, et leur mise en forme en matériaux supports**

Polysaccharide und Oligosaccharide vernetzt mit Disilane-, Dithioether-, Disulphone- oder Butane-diylderivaten und ihre Formgebung als Trägermaterialien

Polysaccharides and oligosaccharides crosslinked with bissilane-, bisthioether-, bissulphoxyde-, bissulphone- and butanediyl-derivatives and their shaping as substrate materials

(84) Etats contractants désignés:
**AT BE CH CY DE DK ES FI FR GB GR IE IT LI LU MC NL PT SE**

(30) Priorité: **11.09.1998 FR 9811376**

(43) Date de publication de la demande:
**15.03.2000 Bulletin 2000/11**

(73) Titulaire: **Eka Chemicals AB**
**445 80 Bohus (SE)**

(72) Inventeur: **Duval, Raphael**
**76330 Notre Dame de Gravenchon (FR)**

(74) Mandataire: **Touati, Catherine et al**
**Cabinet Plasseraud**
**65/67 rue de la Victoire**
**75440 Paris Cedex 09 (FR)**

(56) Documents cités:

| | |
|---|---|
| **EP-B- 0 168 363** | **WO-A-95/18833** |
| **FR-A- 1 307 274** | **GB-A- 974 054** |
| **US-A- 2 598 407** | **US-A- 2 682 482** |

- **GIULIANA C. TESORO: "Cross-Linking of Cellulose with Polyfunctional Sulfones under Anhydrous conditions." TEXTILE RESEARCH JOURNAL., vol. 32, no. 3, 1 mars 1962 (1962-03-01), pages 189-201, XP002102343 US**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

L'invention concerne de nouveaux polymères réticulés à base de dérivés bis-silanes, bis-thioéthers, bis-sulfoxydes, bis-sulfones et butane-di-yl de polysaccharides et d'oligosaccharides, et leur mise sous forme de matériaux supports utiles pour la séparation ou la préparation d'énantiomères.

L'invention concerne également un procédé de préparation desdits composés polymères réticulés ainsi qu'un procédé de préparation de billes de matériaux supports contenant lesdits composés polymères réticulés.

L'invention concerne également une méthode d'obtention de billes de matériaux supports utiles en chromatographie ou en synthèse organique.

L'invention concerne également l'utilisation desdits matériaux supports contenant les composés polymères réticulés en séparation ou en préparation d'énantiomères, par mise en oeuvre dans des procédés de chromatographie ou de synthèse organique en milieu hétérogène.

L'invention concerne également l'utilisation desdits composés polymères réticulés sous forme de membranes dans des procédés utilisant la percolation au travers de membranes pour la séparation ou la préparation d'énantiomères.

La séparation d'énantiomères est un domaine en expansion depuis une vingtaine d'années, tant au niveau préparatif qu'au niveau analytique. Ceci est vrai en particulier pour l'utilisation en pharmacie, où la législation impose l'étude séparée des isomères optiques de tout composé entrant dans la composition d'un médicament. Les polysaccharides substitués ont fait l'objet de nombreuses études, et des celluloses déposées physiquement sur support de gel de silice sont commercialisées. De tels composés présentent cependant le désavantage d'être le plus souvent solubles dans les solvants polaires organiques, ce qui limite singulièrement leur utilisation.

Des solutions récentes ont été apportées au problème de la solubilisation, par l'établissement de liaisons covalentes entre le polysaccharide substitué et le support. Kimata et al. ont exposé leurs résultats (Analytical Methods and Instrumentation, vol.1, 23-29 (1993)) sur une phase stationnaire chirale à base de cellulose-tris-2,3,6-(4-vinyl benzoate) déposée sur gel de silice puis polymérisée sur le support.

Les données chromatographiques obtenues avec deux mélanges racémiques tests, sont les suivantes :

| | Support déposé | | Support déposé et polymérisé | |
|---|---|---|---|---|
| | Oxyde de stilbène | 1-(1-naphtyl éthanol) | Oxyde de stilbène | 1-(1-naphtyl éthanol) |
| k'1 | 1,08 | 2,15 | 1,04 | 1,47 |
| k'2 | 1,66 | 2,84 | 1,44 | 1,80 |
| $\alpha$ | 1,54 | 1,32 | 1,39 | 1,22 |
| $R_s$ | 3,63 | 2,34 | 3,82 | 1,44 |

où

- k'1 et k'2 sont les facteurs de capacité, c'est-à-dire que, si i = 1 ou 2,

$$k'_i = (t_{Ri} - t_0) / t_O,$$

$t_{Ri}$ étant le temps de rétention du composé i et $t_0$ le temps mort ;

- $\alpha$ est le facteur de sélectivité :

$$\alpha = (t_{R2} - t_0) / (t_{R1} - t_0) = k'2 / k'1$$

- $R_S$ est le facteur de résolution :

$$R_s = \frac{1}{4} \left( \frac{\alpha - 1}{\alpha} \right) \left( \frac{k'2}{1+k'2} \right) (N)^{1/2}$$

N étant le nombre de plateaux déterminé à partir de grandeurs chromatographiques mesurées sur le chromatogramme.

On peut observer, entre le support déposé et le support déposé et polymérisé, une baisse systématique des facteurs de sélectivité obtenus : moins 10 % sur le trans-stilbène oxyde ($\alpha$ varie de 1,54 à 1,39) et moins 7,5 % pour le 1-(1-naphtyl)éthanol ($\alpha$ varie de 1,32 à 1,22).

Ce phénomène pourrait s'expliquer par une solubilité partielle du support polymérisé du fait d'une polymérisation incomplète due à une réactivité faible du groupement vinyl benzoate dans des conditions réactionnelles mises en oeuvre.

D'autre part, Kimata et al. ne présentent aucun exemple de séparation dans un solvant polaire pur (brevet ou publication).

Okamoto et al. ont décrit (EP-B-0 155 637) les polymères liés chimiquement à du gel de silice. Ils décrivent en particulier le greffage de cellulose tris-2,3,6-phénylcarbamate sur du gel de silice via un intermédiaire tritylé puis la réalisation de la liaison covalente, entre le gel de silice et le carbamate de polysaccharide partiellement dérivé, par l'action d'un diisocyanate.

Les résultats des analyses élémentaires effectuées lors des différentes étapes de synthèse sont les suivants (EP-B- 0 155 637, page 8 à page 9, ligne 33).

| | | C % | H % | N % |
|---|---|---|---|---|
| 1. | Trityl cellulose déposée sur silice | 15,40 | 1,23 | 0,09 |
| 2. | Cellulose détritylée déposée sur silice | 3,61 | 0.60 | - |
| 3. | Cellulose liée à la silice par toluène 2,4 diisocyanate | - | - | - |
| 4. | Cellulose phényl carbamate liée à la silice et lavée THF/chloroforme | 3,23 | 0,27 | 0,45 |

La perte en taux de greffage entre la cellulose déposée sur silice (2) et le phénylcarbamate de cellulose lié à la silice (4) est importante sachant que le taux de (4) calculé d'après (2) est de l'ordre de 14 % en carbone. On peut donc estimer la perte en motifs hydrocarbonés à 80 % depuis la réalisation de la liaison covalente, entre le cellulose et la silice, par le bras diisocyanate suivi de la dérivation des OH avec l'isocyanate de phényle et le lavage final au chloroforme.

Aucun exemple de séparation dans les solvants polaires n'est donné pour le support obtenu.

Okamoto et al. ont décrit (JP-A-06-206 893) un oligosaccharide lié chimiquement à du gel de silice par l'intermédiaire d'une fonction imine réduite en amine. L'amylose est ensuite régénéré par voie chimioenzymatique à partir de cet oligosaccharide. Les fonctions hydroxyles disponibles sont ensuite dérivées en fonctions carbamates. Aucun exemple de séparation dans un solvant polaire pur n'est donné.

D'autre part, il est intéressant de travailler en surcharge importante de colonne pour des applications préparatives. La possibilité d'utiliser 100 % du matériau chiral sous forme de billes de polymère pur de polysaccharides substitués, au lieu de les déposer physiquement sur support, s'est révélée efficace pour augmenter les rendements massiques des processus de chromatographie chirale préparative. Ainsi les brevets EP-B-348 352, et EP-B-316 270 et la demande WO-A-96/27 639 concernent la réalisation de billes de cellulose pour la séparation d'isomères optiques.

Toutefois, les billes de polymères purs sont solubles dans les solvants polaires comme les solvants halogénés, le tétrahydrofurane, le dioxane, etc. Il est donc impossible d'utiliser ces solvants purs ou des mélanges avec de fortes proportions de ces derniers, pour réaliser des séparations d'isomères.

Afin de pallier cet inconvénient, Francotte et al. ont décrit la polymérisation par rayonnement de polysaccharides dérivés (WO-A- 96/27 615).

Toutefois, le taux de polymérisation semble difficile à maîtriser dans un tel procédé, la réticulation par procédé photochimique intervenant préférentiellement en surface de la bille de polymères, les rayonnements ne pouvant pénétrer à l'intérieur de la bille. Aucun exemple de séparation n'est donné dans un polymère pur.

Francotte et al. ont également décrit dans la demande internationale WO-A-97/04 011 la réticulation chimique de carbamates et d'esters de polysaccharides ne comportant pas de groupe polymérisable. La réticulation a lieu selon l'auteur en présence d'initiateur de polymérisation radicalaire. Le mécanisme réactionnel et la structure des produits obtenus ne sont pas décrits. Aucun exemple de séparation dans un solvant polaire pur n'est donné.

Lange et al. ont décrit (US-A-5 274 167) la polymérisation de dérivés d'acide méthacrylique optiquement actifs, la structure du support n'étant pas explicitée. Aucun exemple de séparation dans un solvant polaire pur.

Minguillon et al. ont décrit la synthèse de carbamates de cellulose partiellement dérivés avec un chlorure d'undécénoyle. Toutefois, la structure du support n'est pas explicitée (J. of Chromatog. A 728 (1996), 407 - 414 et 415-422).

Oliveros et al. (WO-A-95/18 833) décrivent des dérivés de polysaccharides comportant un radical éthylénique et déposés sur un support de gel de silice comportant des groupements vinyles puis polymérisés. Aucun exemple de séparation n'est donné avec un solvant polaire pur.

On connaît également le document FR-A-1307274, qui décrit notamment la préparation de bis-éthers de cellulose.

On connaît enfin le document US-A-2682482, qui décrit notamment des dérivés d'hydrates de carbone formés d'unités d'anhydroglucose substituées portant notamment des substituants consistant en des groupes fonctionnels dimérisables par catalyseurs peroxydes.

L'invention concerne des nouveaux composés polymères réticulés par l'intermédiaire de liaisons covalentes entre des chaînes distinctes d'un enchaînement osidique de dérivés de polysaccharides ou d'oligosaccharides, lesdites liaisons covalentes comportant des fonctions butane di-yl, bis-silanes, bis-thioéthers, bis-sulfoxydes ou bis-sulfones.

Ces nouveaux composés polymères réticulés sont insolubles dans les solvants organiques polaires comme par exemple le tétrahydrofurane, le 1,4-dioxane, le chloroforme, le dichlorométhane, le dichloroéthane, le chlorure d'isopropyle, le chlorobutane, l'acétone, la méthyléthylcétone, l'acétonitrile, le nitrométhane, les alcools comme le méthanol et l'éthanol, et les esters comme l'acétate d'éthyle ou de butyle.

Des billes de matériaux supports contenant lesdits composés polymères réticulés sont utiles pour la séparation d'énantiomères par chromatographie liquide ou supercritique. De façon surprenante, un traitement à chaud, jusqu'à 80°C, dans des solvants organiques polaires, desdits matériaux supports, n'altère pas leur propriété de discrimination chirale lorsqu'ils sont mis en oeuvre dans des procédés de séparation énantiosélective.

Cette propriété est particulièrement intéressante dans l'industrie pharmaceutique, car la possibilité d'utiliser des mélanges éluants constitués de solvants organiques polaires, purs ou en fort pourcentage, en chromatographie chirale préparative pour la séparation industrielle de mélanges racémiques par exemple, permet d'augmenter très sensiblement la concentration des solutés pendant le déroulement du processus chromatographique. La consommation de solvant s'en trouve amoindrie et la productivité de la séparation autant améliorée.

Les composés polymères réticulés sont caractérisés en ce qu'ils comportent un radical de formule générale (I) ou (II) :

$$-X-Y-A[CH_2-CH(R)-CH(R)-CH_2]_mA-Y-X- \quad (I)$$

$$-X-Y-A[CH_2-CH(R)-L-CH(R)-CH_2]_mA-Y-X- \quad (II)$$

dans lesquelles X représente un atome d'oxygène ou le groupement -NH, m est un nombre entier non nul au plus égal à 5, R représente un atome d'hydrogène ou un radical alkyle substitué ou non, linéaire ou ramifié, ayant de 1 à 8 atomes de carbone, Y représente un groupement NH-CO-, un groupement -NH-CS-, ou un groupement -CO-, A représente une simple liaison, un radical alkylène linéaire ou ramifié ayant 1 à 21 atomes de carbone, un radical arylène ayant de 6 à 18 atomes de carbone ou un radical aralkylène ayant de 7 à 40 atomes de carbone, L représente un radical bis-thioéther, de formule générale (IIIa), bis-sulfoxyde de formule générale (IIIb), ou bis-sulfone, de formule générale (IIIc), ou un bis-silane de formule générale (IV) :

$$-S-W_1-W_2-W_3-S- \quad (IIIa)$$

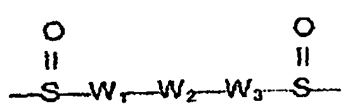

(IIIb)

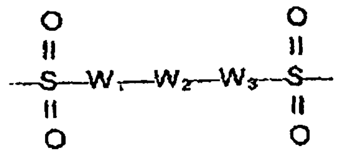

(IIIc)

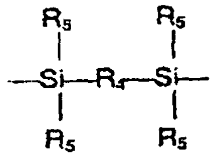

(IV)

où S représente un atome de soufre, O un atome d'oxygène et Si un atome de silicium ; et où

- $W_1$ et $W_3$ identiques ou différents, représentent chacun :
- un radical alkylène linéaire ou ramifié ayant de 1 à 21 atomes de carbone, un radical arylène ayant de 6 à 18 atomes de carbone, ou un radical aralkylène ayant de 7 à 40 atomes de carbone.
- $W_2$ représente une simple liaison, $W_1$, un atome d'oxygène, un atome de soufre ou un diester symétrique de formule

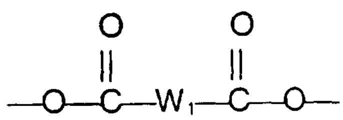

(V)

$R_5$ représente un radical alkyle linéaire ou ramifié ayant de 1 à 5 atomes de carbone ou l'hydrogène, et $R_4$ représente le radical

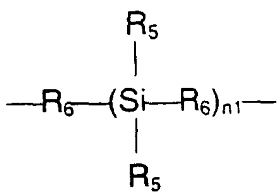

(VI)

où $R_6$ est $(CH_2)_{n2}$ ou l'oxygène et où n1 varie de 0 à 3 000 et n2 de 0 à 10.

La formule (I), qui ne contient pas de radical L, est construite sur un radical butane di-yl éventuellement substitué.

Les radicaux arylènes contenus respectivement dans les radicaux des formule générale (I) et (II) peuvent être éventuellement substitués par un ou plusieurs atomes ou radicaux, identiques ou différents, choisis parmi les atomes d'halogène, les radicaux alkyles contenant de 1 à 4 atomes de carbone, les radicaux alkoxy contenant de 1 à 4 atomes de carbone et les groupes nitro. Les radicaux arylènes contenus dans les radicaux de formule générale (I) et (II) sont, de préférence, des radicaux phénylènes ou des radicaux naphtylènes, éventuellement substitués par un ou plusieurs atomes ou radicaux, identiques ou différents, choisis parmi les atomes d'halogène et les radicaux alkyles contenant de 1 à 4 atomes de carbone, les radicaux alkyloxy contenant de 1 à 4 atomes de carbone et les groupe nitro.

Les composés polymères réticulés selon l'invention et possédant un radical de formule générale (II), et plus particulièrement un radical de type bis-thioéther de formule générale (IIIa), peuvent être transformés en composés comportant les formules générales (IIIb) ou (IIIc) par oxydation à l'aide de composés oxydants pour conduire à des fonctionnalités de type bis-sulfoxyde ou de type bis-sulfone.

La transformation de fonctions thioéthers en fonctions sulfoxydes et sulfones est connue per se et utilise plusieurs agents oxydants. L'obtention de sulfoxydes à partir de thioéthers peut être réalisée en utilisant l'eau oxygénée ("Organic Compounds of Bivalent Sulfur" vol.2, pp 64-66, Chemical Publishing Company, New-York, 1960), ou l'indobenzène-dichlorure (Barbieri, J. Chem. Soc. C659,1968), ou le métaperiodate de sodium (Léonard, J. Org. Chem. 27, 282, 1962) ou le tertiobutyloxychlorure (Walling, J. Org. Chem. 32, 1286, 1967) ou les peracides.

Les fonctions sulfoxydes obtenues peuvent être subséquemment transformées en fonctions sulfones à l'aide de permanganate de potassium ou d'eau oxygénée (Heubert, Chem. Comm., 1036, 1968 et Curci, Tetrahedron Lett., 1749,1963).

L'agent oxydant préférentiellement utilisé est l'eau oxygénée. Le solvant réactionnel est en général de l'eau, un alcool ou un solvant organique miscible avec l'eau. La réaction est conduite à une température comprise entre 10 et 40 °C et la durée de réaction varie de 1 à 8 heures.

Les composés polymères réticulés selon l'invention sont caractérisés en ce que les radicaux de formule générale (I) et (II) sont liés à des unités chirales osidiques d'un enchaînement linéaire, ramifié ou cyclique d'un dérivé de polysaccharide ou d'oligosaccharide selon les formules générales (VII) et (VIII) qui suivent.

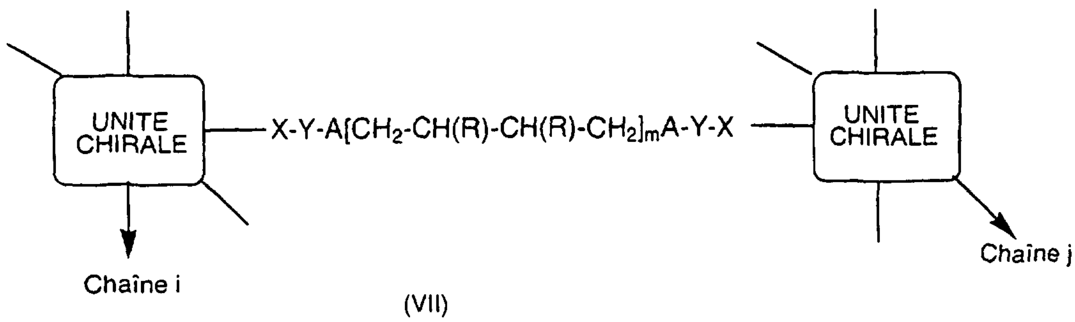

(VII)

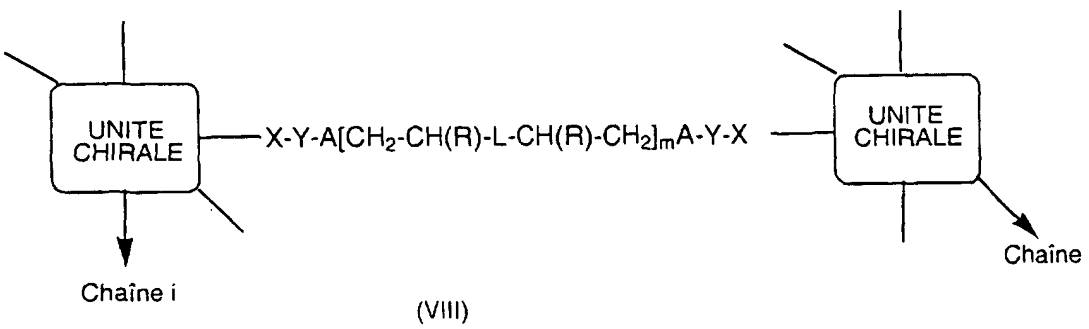

(VIII)

où X, Y, A, R, L et m ont chacun la même signification que dans les formules générales (I) et (II) et dans lesquelles le symbole "unité chirale", qui sera désigné par formule (IX), est l'unité chirale osidique d'un enchaînement linéaire, ramifié ou cyclique d'un dérivé de polysaccharide ou d'oligosaccharide, étant entendu que "chaîne i" et "chaîne j" symbolisent le fait que les unités chirales à chaque extrémité des radicaux de formules (I) et (II) sont situées sur des chaînes distinctes ou des enchaînements distincts d'unités osidiques, au sein du polysaccharide ou de l'oligosaccharide.

En effet, l'insolubilité constatée des composés polymères réticulés selon les formules générales (VII) à (VIII) dans les solvants polaires, même à haute température, ne peut être conférée que par une réticulation tridimensionnelle du polysaccharide, cette réticulation se produisant par réaction entre les différentes chaînes constituant le dérivé de polysaccharide et conduisant à une modification drastique des propriétés de solubilité.

De façon surprenante, les matériaux supports obtenus possèdent une stabilité remarquable dans tous les solvants organiques, et plus particulièrement dans les solvants organiques polaires à fort pouvoir dissolvant pour les dérivés benzoates et carbamates de polysaccharides, comme le chloroforme, l'acétone, le tétrahydrofurane, le dioxane ou le toluène.

De manière également surprenante, ces matériaux supports sont stables dans les solvants cités précédemment jusqu'à des températures pouvant dépasser 80 °C. Par exemple un test de sélectivité ($\alpha$) effectué sur l'indapamide avec un matériau support synthétisé selon l'exemple 1 présenté plus loin a montré que le facteur de sélectivité $\alpha$ ($\alpha$ = 1,32 dans le 1,2-dichloroéthane pur à 80°C) déterminé selon l'exemple 2 également présenté plus loin, n'est pas affecté par le passage d'environ 1000 volumes morts de colonne des solvants suivants :

| Solvants | Solvants |
|---|---|
| Diisopropyléther | Propionitrile |
| Diéthyléther | Benzène |
| Dibutyléther | Chlorure de butyle |
| Tert-butyl methyléther | Chloroheptane |
| Acetaldéhyde diéthyl acétal | 1,1,1-trichloréthane |
| 1,4-dioxane | Dichloro 1,2-éthane |
| Ethylèneglycol diméthyléther | Trifluoroéthanol |
| 2-méthoxy éthyl éther | Hydroperoxyde de tert-butyle |
| Ethyl butyrate | Acétate de butyle |
| Méthanol | Ethanol |
| Isopropanol | 1-butanol |
| Acétonitrile | Dichlorométhane |
| Chloroforme | Tétrahydrofurane |
| Acétate d'éthyle | Nitrométhane |
| Acétone | Méthyléthyl cétone |

Ces propriétés permettent d'envisager la mise en oeuvre des matériaux supports dans des procédés de séparation ou de préparation d'énantiomères utilisant tout type de solvant polaire jusqu'à des températures pouvant dépasser 80°C, ce qui semble particulièrement intéressant pour des applications industrielles.

La synthèse des composés de formule générale (VII) et (VIII) est réalisée en deux étapes :

- synthèse de dérivés de polysaccharides ou d'oligosaccharides activés et portant des doubles liaisons éthyléniques ; et
- réticulation chimique des doubles liaisons éthyléniques sur elles-mêmes par un mécanisme radicalaire, ou par réaction d'au moins deux doubles liaisons éthyléniques avec des composés bifonctionnels comportant des fonctions bis-thiols ou bis-hydrogénosilanes.

Les dérivés activés portant des doubles liaisons éthyléniques sont des dérivés de polysaccharides ou d'oligosaccharides de formules générales (Xa) à (Xk) :

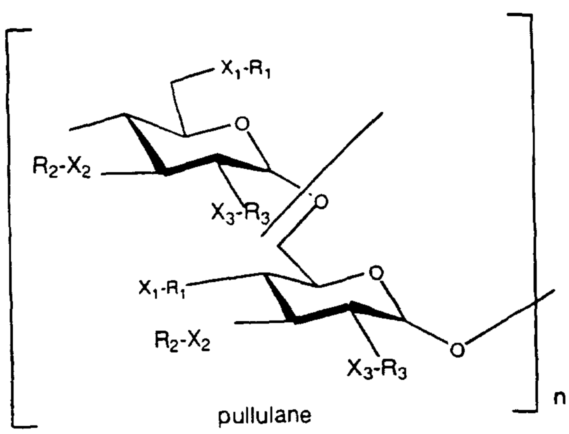

pullulane

(Xa)

(Xb)

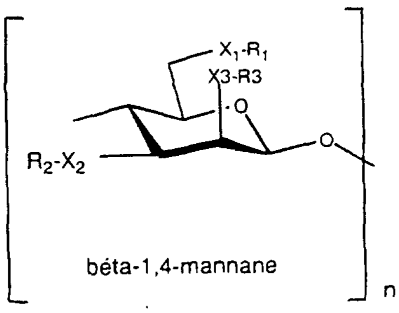

béta-1,4-mannane

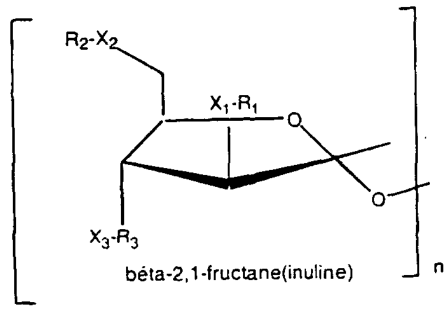

béta-2,1-fructane(inuline)

(Xc)

(Xd)

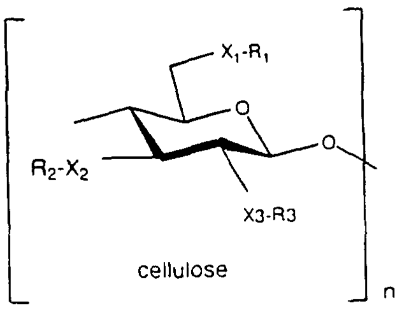

cellulose

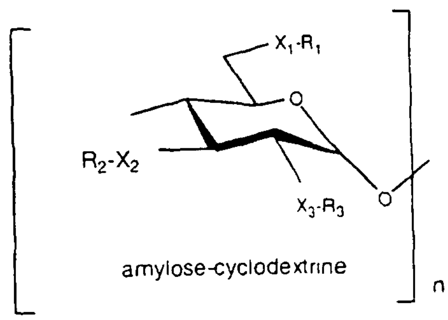

amylose-cyclodextrine

(Xe)

**(Xf)**

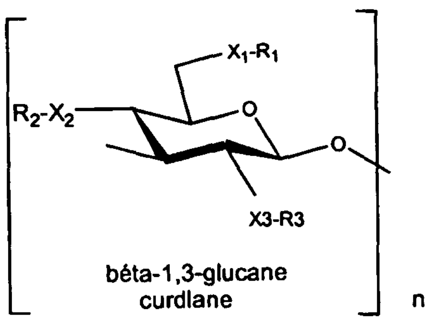

**béta-1,3-glucane curdlane**

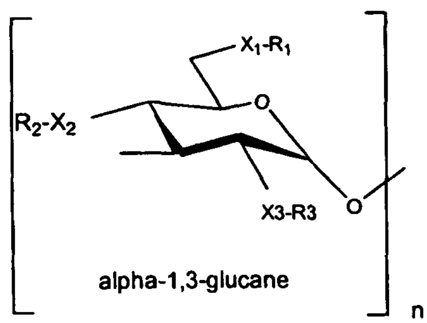

**alpha-1,3-glucane**

**(Xg)**

**(Xh)**

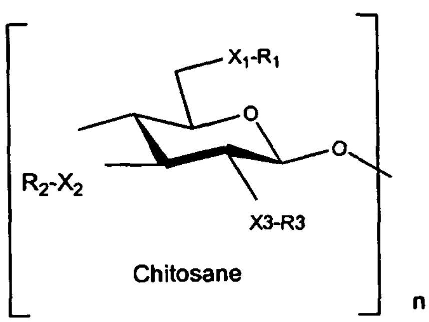

**Chitosane**

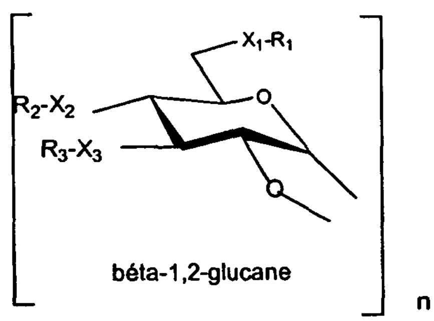

**béta-1,2-glucane**

**(Xi)**

(Xj) 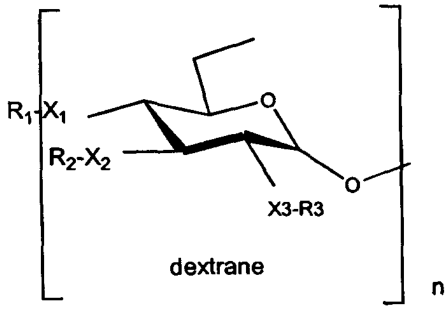

dextrane

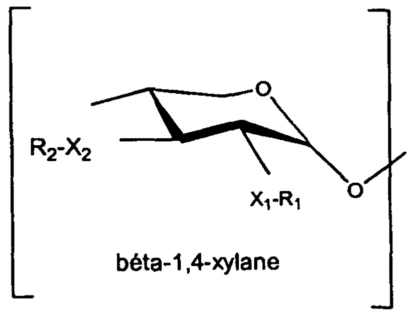 (Xk)

béta-1,4-xylane

Dans ces formules,

a) les symboles $X_1$, $X_2$ et $X_3$, identiques ou différents, représentent chacun un atome d'oxygène ou le groupement -NH ;
b) chacun des symboles $R_1$, $R_2$ et $R_3$ représente indépendamment :

- un radical éthylénique ayant la formule générale :

$$(CH\,[R] = CH\text{-})_{m1}A\text{-}Y\text{-} \qquad (XI)$$

dans laquelle m1 est un nombre entier non nul au plus égal à 5, R représente un atome d'hydrogène ou un radical alkyle substitué ou non, linéaire ou ramifié, ayant de 1 à 8 atomes de carbone, Y représente un groupement -NH-CO-, un groupement -NH-CS- ou un groupement -CO- et A représente une simple liaison, un radical alkylène linéaire ou ramifié ayant de 1 à 21 atomes de carbone, un radical arylène ayant de 6 à 18 atomes de carbone ou un radical aralkylène ayant de 7 à 40 atomes de carbone ;
- ou un radical ayant la formule $A_2$-$A_1$-$CX_5$- (XII) dans laquelle $X_5$ représente un atome d'oxygène ou de soufre, $A_1$ représente une simple liaison ou un groupement -NH- et $A_2$ représente un radical aryle ayant de 6 à 24 atomes de carbone, un radical aralkyle ayant de 7 à 36 atomes de carbone ou un radical alkylaryle ayant de 7 à 18 atomes de carbone ;
- ou un atome d'hydrogène ou un groupe $NO_2$ ;

n étant un nombre entier compris entre 5 et 20 000,
étant entendu que, dans chaque unité chirale osidique (Xa) à (Xk), l'un au moins des symboles $X_1$, $X_2$ et $X_3$ représente un atome d'oxygène, et que dans au moins une partie des unités osidiques chirales constituant une des chaînes du dérivé de polysaccharide, l'un au moins des symboles $R_1$, $R_2$ et $R_3$ représente un radical de formule générale (XI) et l'un au moins des symboles $R_1$, $R_2$ et $R_3$ représente un radical de formule générale (XII).

Les radicaux arylènes ou aryles contenus respectivement dans les radicaux de formule générale (XI) et (XII) peuvent être éventuellement substitués par un ou plusieurs atomes ou radicaux, identiques ou différents, choisis parmi les atomes d'halogène, les radicaux alkyles contenant de 1 à 4 atomes de carbone, les radicaux alkoxy contenant de 1 à 4 atomes de carbone et les groupes nitro. Les radicaux arylènes contenus dans les radicaux de formule générale (XI) sont, de préférence, des radicaux phénylènes ou des radicaux naphtylènes éventuellement substitués par un ou plusieurs atomes ou radicaux identiques ou différents choisis parmi les atomes d'halogène et les radicaux alkyles contenant 1 à 4 atomes de carbone, les radicaux alkyloxy contenant 1 à 4 atomes de carbone et les groupes nitro. Les radicaux aryles contenus dans les radicaux de formules générale (XII) sont, de préférence, des radicaux phényles ou des radicaux naphtyles, éventuellement substitués par un ou plusieurs atomes ou radicaux, identiques ou différents, choisis parmi les atomes d'halogène, les radicaux alkyles contenant de 1 à 4 atomes de carbone, les radicaux alkyloxy contenant de 1 à 4 atomes de carbone et les groupes nitro.

Généralement, les dérivés de polysaccharides selon l'invention ont un degré de polymérisation compris entre 5 et 20 000 et de préférence entre 10 et 500.

Généralement, les dérivés de polysaccharides selon l'invention contiennent de 0 à 3, de préférence de 0,05 à 2,95 groupes de formule générale (XI) par unité osidique de formule générale (Xa) à (Xk), et de 0 à 3, de préférence de 0,05 à 2,95 groupes de formule générale (XII) par unité structurale de formule générale (Xa) à (Xk).

Généralement, les dérivés de polysaccharides selon l'invention dérivent de l'amylose, de la cellulose, du chitosane ou des cyclodextrines α, β ou γ.

Selon l'invention, les dérivés de polysaccharides peuvent être obtenus

- par action sur un polysaccharide non protégé d'un composé de formule générale :

$$[CH(R)=CH]_{m1}A\text{-}Y_1 \qquad (XV)$$

  dans laquelle R, $m_1$ et A sont définis comme précédemment et $Y_1$ représente un atome d'halogène (chlore, brome), un groupe -N=C=O ou -N=C=S ou un groupe -CO-Z dans lequel Z représente un atome d'halogène (chlore, brome), pour introduire un radical éthylénique de formule générale (XI) ;
- et/ou par action d'un isocyanate ou d'un isothiocyanate de formule générale :

$$A_2\text{-}A_1\text{-}N=C=X_4 \qquad (XVI)$$

  dans laquelle $A_2$ et $A_1$ sont définis comme précédemment et $X_4$ représente un atome d'oxygène ou de soufre
- ou d'un composé de formule générale :

$$A_2\text{-}A_1\text{-}CO\text{-}Z_1 \qquad (XX)$$

  dans laquelle $A_2$ et $A_1$ sont définis comme précédemment, et $Z_1$ représente un atome d'halogène (chlore, brome), pour introduire un radical de formule générale (XII).

Selon l'invention, l'introduction des radicaux de formule générale (XI) et/ou (XII) s'effectue dans les conditions habituellement utilisées pour préparer un éther, un ester, un amide, un carbamate, un thiocarbamate, une urée ou une thiourée, à partir de l'alcool ou de l'amine correspondant.

L'ordre d'introduction des réactifs de formule générale (XV), (XVI) ou (XX) influe sur les caractéristiques énantiosélectives des phases stationnaires chirales obtenues à partir des polysaccharides ainsi modifiés.

Les dérivés de polysaccharides selon l'invention sont obtenus à partir de polysaccharides, c'est-à-dire possédant dans leur structure la répétition d'une même unité osidique chirale, comme symbolisé dans les formules générales (Xa) à (Xk).

Toutefois, ces dernières formules ne représentent qu'une partie de la réalité, car un polysaccharide est constitué de chaînes distinctes d'enchaînements osidiques, le nombre de chaînes étant variable ainsi que la longueur des enchaînements osidiques représentée par le nombre n des formules (Xa) à (Xk). Chacune des formules (Xa) à (Xk) représente l'un quelconque des enchaînements d'un polysaccharide et constitue l'une des chaînes parmi d'autres au sein du polysaccharide. Les cas par exemple des cyclomaltohexaose, heptaose et octaose ou α, β, γ-cyclodextrines contenues dans l'invention est plus simple dans la mesure où n est déterminé et identique pour tous les enchaînements (cycliques) distincts.

Les dérivés de polysaccharides selon l'invention sont solubles dans les solvants organiques polaires comme ceux indiqués dans le tableau de la page 11.

Après réticulation chimique selon l'invention, ils conduisent aux nouveaux polymères réticulés de formule générale (I) et (II) et deviennent totalement insolubles dans ces mêmes solvants.

Les dérivés de polysaccharides portant des doubles liaisons éthyléniques sont symbolisés par les composés de formules générales (Xa) à (Xk) comportant un radical éthylénique de formule générale (XI).

Les fonctions éthyléniques de ces radicaux sont mises en réaction sur elles-mêmes ou sur des composés comportant des fonctions thiols ou hydrogénosilanes.

La réaction entre des doubles liaisons éthyléniques est connue per se et peut être conduite grâce à un mécanisme intermédiaire d'addition de radicaux libres (Advanced Organic Chemistry, Jerry March, 2ème édition, Chapitre 15, Mac Graw-Hill Series in Advanced Chemistry). L'initiateur de radicaux libres est en général un peroxyde, comme le peroxyde de benzoyle ou un composé diazo comme l'α,α'-azo-isobutyronitrile. La réaction est menée dans un solvant organique comme le tétrahydrofurane ou le toluène à des températures variant de 20 à 200 °C. La réaction mise en jeu est la suivante :

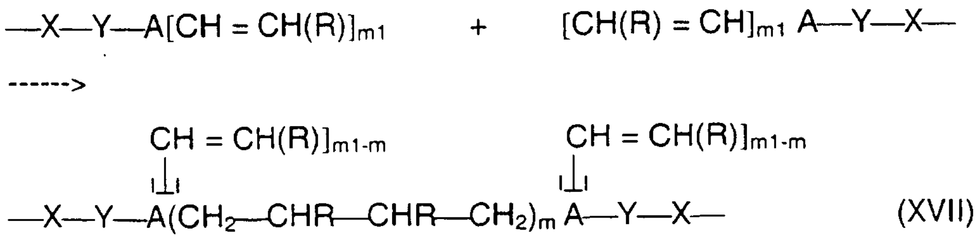

(XVII)

où les symboles X, Y, A, R, et m sont identiques à ceux décrits dans les formules (I) et (II), et m1 est défini comme dans la formule (XI),

et où les radicaux de formule (XVII) représentent un cas particulier de composés comportant un radical de formule générale (I).

La réaction d'addition anti-Markovnikov de fonctions thiols sur des doubles liaisons éthyléniques, en présence d'initiateur de radicaux libres, qui conduit à la formation de liaisons thioéthers est connue per se.

Par exemple, Rosini et coll. ont décrit l'immobilisation d'alcaloïdes de quinquina via une liaison thioéther dans Tetrahedron Lett. 26, 3361-3364, 1985. Plus récemment, Tambute et coll. ont décrit l'immobilisation de dérivés de tyrosine selon la même technique dans New J. Chem. 13; 625-637, 1989. Plus récemment encore, Caude et coll. ont exposé les résultats de leurs travaux et ont montré l'avantage d'un lien covalent thioéther en terme de stabilité chimique dans J. Chromatogr. 550, 357-382,1991.

Les composés éthyléniques comportant les radicaux de formule générale (XI) sont mis en solution un solvant tel que par exemple le toluène, le chloroforme ou le tétrahydrofurane, en présence d'un composé bis-thiol de formule générale :

$$HS\text{-}W_1\text{-}W_2\text{-}W_3\text{-}SH \qquad (XIII)$$

où $W_1$, $W_2$, et $W_3$ représentent des symboles identiques aux symboles des composés de formule générale (IIIa), (IIIb) ou (IIIc).

Les bis-thiols préférés sont choisis parmi les composés commercialement disponibles comme l'éthane-dithiol ou le butane-dithiol. La réaction est menée à une température de 20 à 110 °C en présence d'un initiateur de radicaux libres, comme le peroxyde de benzoyle par exemple. La réaction chimique mise en jeu est la suivante :

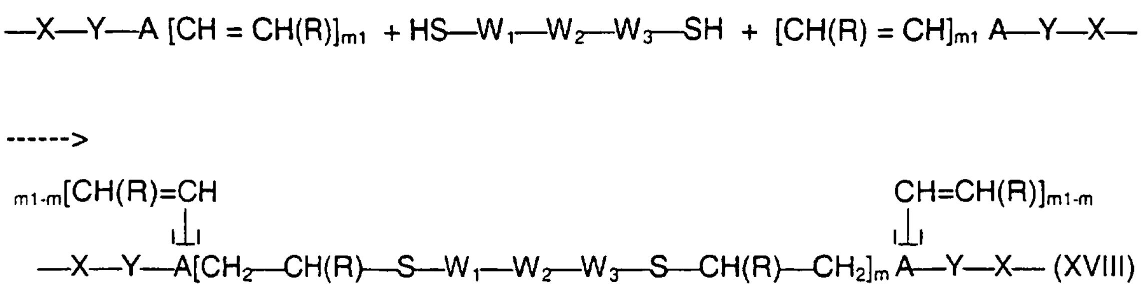

(XVIII)

où X, Y, A, R, sont des symboles identiques à ceux décrits dans la formule (II) ; les radicaux de formule générale (XVIII) représentent un cas particulier de radical de formule générale (II) où L représente un radical de formule générale (IIIa), qui peut être subséquemment transformé en radical de formule générale (IIIb) ou (IIIc) par oxydation.

L'hydrosilylation de doubles liaisons éthyléniques par des hydrogénosilanes est connue per se et utilisée pour la création de liaisons silicium-carbone. Par exemple, Stuurman, H.W., dans Chromatopgraphia, Vol. 25, n°4, April 1988, pp 265 à 271, a décrit la séparation d'énantiomères par utilisation d'une phase stationnaire à base de quinine hydrosilylée liée à du gel de silice par liaison covalente.

La polymérisation par hydrosilylation est connue per se et a été décrite dans J. Chromatogr. 1992, 594, 283-290. Cette réaction utilise des hydrosilanes ou des hydrosiloxanes qui peuvent être représentés par la formule générale suivante :

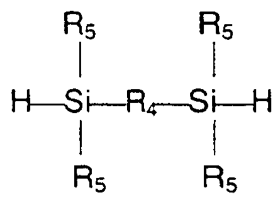

(XIV)

où $R_4$ représente un radical de formule générale (VI) défini plus haut et $R_5$ a la même signification que dans le radical de formule générale (IV) défini plus haut.

La réaction est la suivante :

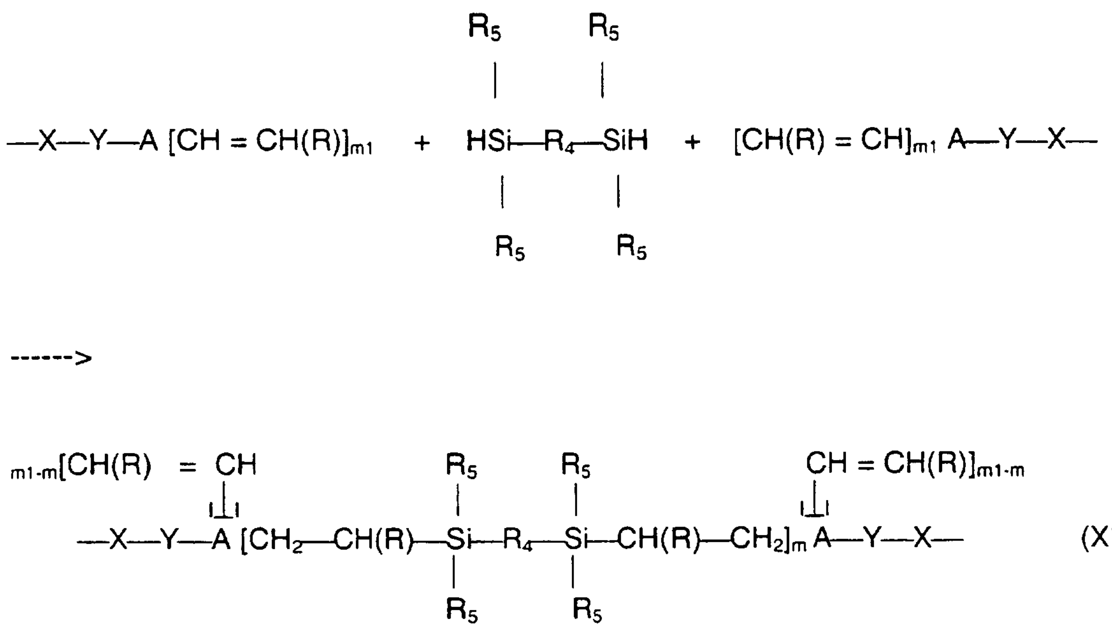

(XIX)

Les radicaux de formule générale (XIX) représentent un cas particulier de radical de formule générale (II) où L représente un radical de formule générale (IV).

La réaction d'hydrosilylation est menée dans un solvant inerte vis-à-vis de l'hydrosilylation comme le toluène, le dioxane, le chloroforme, le tétrahydrofurane ou des mélanges de ces solvants. Un catalyseur métallique est nécessaire pour favoriser la cinétique de la réaction, comme un complexe de platine ou de rhodium. Le complexe métallique préféré est l'acide hexachloroplatinique. Les hydrogénosilanes préférés sont les bis-hydrogénosilanes comme le 1,1,4,4,-tétraméthyldisilyléthylène ou le 1,1,3,3,-tétraméthyldisiloxane. La température de la réaction varie de 50 à 180 °C, la température préférée étant 100 °C.

Les composés polymères réticulés selon l'invention possèdent leur propriété d'insolubilité dans les solvants organiques par le fait que la réticulation est réalisée entre les chaînes du polymères et que les liaisons inter-chaînes comportent un radical de formule générale (I) ou (II).

La structure générale d'un polymère réticulé peut être représentée par la formule générale (VII) ou (VIII) où le symbole unité chirale de formule générale (IX) représente une unité chirale osidique, d'une chaîne de dérivé de polysaccharide ou d'oligosaccharide de formule générale (Xa) à (Xk), possédant des radicaux éthyléniques de formule générale (XI), ceux-ci ayant été subséquemment mis en réaction sur eux-mêmes ou avec des bis-thiols de formule générale (XIII) ou des bis-hydrogénosilanes de formule générale (XIV) pour conduire à la formation de radicaux de formules générales (XVII), (XVIII) et (XIX), et pouvant être représentés par les radicaux de formule générale (I) et (II).

La réticulation entre les chaînes des dérivés de polysaccharides, constatée par l'insolubilisation subséquente dans les solvants organiques polaires desdits dérivés de polysaccharides précédemment solubles, est symbolisée par le fait que, dans les formules générales (VII) et (VIII), les deux symboles de formule générale (IX) "unité chirale" sont indiqués appartenir à une chaîne i et à une chaîne j distinctes l'une de l'autre.

Les nouveaux polymères réticulés selon l'invention peuvent être mis sous forme de matériaux supports selon

deux procédés différents :

* matériaux supports consistant en des billes contenant essentiellement lesdits nouveaux polymères réticulés ;
* matériaux supports consistant en des supports poreux commerciaux contenant un pourcentage desdits nouveaux polymères réticulés inférieur à 80%.

L'obtention de matériaux supports consistant en des billes contenant essentiellement lesdits nouveaux polymères réticulés est réalisée en deux étapes :

a) Les dérivés de polysaccharides de formules générales (Xa) à (Xk) sont mis en solution dans un solvant organique polaire comme le toluène, le tétrahydrofurane, le dichlorométhane, le 1,4-dioxane ou l'oxyde de mésityle, le solvant préféré étant l'oxyde de mésityle. La concentration est de 1 gramme de dérivé (Xa) à (Xk) pour 10 à 50 ml de solvant organique. La concentration préférée est de 1 g pour 30 ml. Cette solution est coulée sur une solution aqueuse, de 10 à 200 ml, contenant des agents tensioactifs ioniques, anioniques ou cationiques et des stabilisants d'émulsion de types polymères hydroxylés contenant plus de 16 atomes de carbone.
Les agents tensioactifs préférés sont des agents tensioactifs anioniques, et parmi ceux-ci le dodécylsulfate de sodium. Parmi les polymères hydroxylés contenant plus de 16 atomes de carbone, les alcools polyvinyliques sont préférés.
La concentration en dodécylsulfate de sodium varie de 0,1 à 5 % en poids, la concentration préférée étant de 0,7 % en poids. La concentration en alcool polyvinylique varie de 0,1 à 10 %, la concentration préférée étant de 1 % pour un alcool polyvinylique de masse molaire comprise entre 13 000 et 23 000.
Les deux phases sont émulsionnées sous agitation, la vitesse d'agitation variant de 10 à 3000 tours/minute, la vitesse préférée étant de 500 tours/minute. L'émulsion est ensuite chauffée au-dessus du point d'ébullition du solvant organique pour éliminer celui-ci, la température préférée étant de 95 °C.
Des billes contenant essentiellement les dérivés polymères de formules (Xa) à (Xk) sont obtenues. Elles ont un diamètre variant de 0,1 à 300 µm et leur forme est sensiblement sphérique. Les diamètres de billes préférés varient de 3 à 40 µm et dépendent de la vitesse d'agitation de l'émulsion. La surface spécifique des billes obtenues varie de 1 à 600 $m^2$/g. La surface spécifique préférée étant de 20 à 80 $m^2$/g.
b) Les billes contenant essentiellement les dérivés de polysaccharides de formule générale (Xa) à (Xk) sont mises en suspension dans des solvants organiques ou aqueux dans lesquels elles sont insolubles, comme l'eau, les alcanes linéaires ou ramifiés ou les alcools. Les solvants organiques préférés sont l'hexane et l'heptane. La concentration de billes desdits dérivés de polysaccharides varie de 1/2 à 1/1000 poids/volume, la concentration préférée étant de 1/10. L'agent réticulant est ensuite additionné à reflux du solvant. Il est choisi parmi les composés de formule générale (XIII) ou (XIV), les agents réticulants préférés étant l'éthane-dithiol, le butane-dithiol, le 1,1,4,4-tétraméthyldisilyléthylène ou le 1,1,3,3-tétraméthyldisiloxane.
L'addition d'un initiateur de radicaux libres comme agent réticulant est nécessaire pour obtenir les composés réticulés de formule générale (I). La quantité d'initiateur de radicaux libres varie de 0,1 à 5 % en poids par rapport aux poids de billes de départ, la quantité préférée étant de 1 %.
La quantité de composés de formule générale (XIII) ou (XIV), calculée sur le nombre de radicaux de formule générale (XI) portant les doubles liaisons éthyléniques réactives contenues dans les composés de formules (Xa) à (Xk) peut varier de la stoechiométrie à 10 fois la stoechiométrie, la quantité préférée étant celle correspondant à 4 fois la stoechiométrie.
L'initiateur de radicaux libres préféré est le peroxyde de benzoyle. L'utilisation de composés de formule générale (XIII) nécessite également l'usage d'un initiateur de radicaux libres pour favoriser l'addition anti-Markovnikov. La quantité d'initiateur de radicaux libres varie de 0,1 à 5 % en poids de la quantité de composé de formule (XIII) utilisée, la quantité préférée étant de 1 %. L'initiateur de radicaux libres préféré est le peroxyde de benzoyle. La température de réaction varie de 30 à 100°C, la température préférée étant de 80 °C. La durée de la réaction varie de 12 heures à 5 jours, la durée préférée étant de 24 heures.
La suspension est filtrée puis lavée avec un rapport de 1/1 à 1/100 (poids/volume) de préférence de 1 g pour 10 ml dans un solvant organique polaire dans lequel les dérivés de polysaccharides de formule générale (Xa) à (Xk) sont solubles. Le solvant préféré est le tétrahydrofurane. On élimine ainsi les composés (Xa) à (Xk) non réticulés. On obtient des matériaux supports consistant en des billes contenant essentiellement lesdits nouveaux polymères réticulés.

L'obtention de matériaux supports consistant en des supports poreux commerciaux contenant un pourcentage de nouveaux polymères réticulés inférieur à 80 % peut être réalisé comme suit.

a) Les dérivés de polysaccharides de formule générale (Xa) à (Xk) sont mis en solution dans un solvant organique

polaire, comme le toluène, le tétrahydrofurane, le dichlorométhane ou le 1,4-dioxane, le solvant préféré étant le tétrahydrofurane. La concentration est de 1 gramme de composé (Xa) à (Xk) pour 10 à 50 ml de solvant organique, la concentration préférée étant de 1 g dans 30 ml. Un support poreux commercial sous forme de solide pulvérulent est additionné. Son diamètre de particule varie de 1 à 300 μm, le diamètre préféré étant compris entre 3 et 30 μm. Son diamètre de pore varie de 30 à 10 000 Å, le diamètre préféré étant de 300 Å. La nature chimique du support poreux est variable et peut être minérale ou organique, comme le gel de silice, l'alumine, la zircone, le carbone, le polystyrène divinylbenzène ou les polyacrylamides. Le support préféré est le gel de silice. La quantité de composé de formule générale (Xa) à (Xk) par rapport à la quantité de support varie de 1 à 80 %, la quantité préférée étant de 20 %. La suspension obtenue est ensuite évaporée sous vide ou à pression ordinaire, à une température de 20 à 150 °C, la température préférée étant de 80 °C.

b) Les supports poreux contenant un pourcentage inférieur à 80 % de composés de formules générales (Xa) à (Xk) sont mis en suspension dans des solvants organiques ou aqueux caractérisés en ce qu'ils ne solubilisent pas les composés de formules générales (Xa) à (Xk). Ces solvants peuvent être par exemple, l'eau, les alcanes linéaires ou ramifiés ou les alcools. Les solvants organiques préférés sont l'hexane et l'heptane. La quantité de solvant par rapport au poids de support poreux contenant les composés de formules générales (Xa) à (Xk) est de 1 fois à 100 fois en volume par rapport au poids de support. La quantité préférée est de 10 fois. L'agent réticulant est ensuite additionné à reflux du solvant. Il est choisi parmi les composés de formule générale (XIII) ou (XIV), les agents réticulants préférés étant l'éthane-dithiol, le butane-dithiol, le 1,1,3,3-tétraméthyledisiloxane ou le 1,1,4,4-tétraméthyldisilyléthylène.

L'addition d'un initiateur de radicaux libres comme agent réticulant est nécessaire pour obtenir les composés de formule générale (I). La quantité d'initiateur de radicaux libres varie de 0,1 à 5 % en poids par rapport au poids de composé de formule générale (Xa) à (Xk), la quantité préférée étant de 1 %.

La quantité de composés de formule générale (XIII) ou (XIV), calculée sur le nombre de radicaux de formule générale (XI) portant les doubles liaisons éthyléniques réactives contenues dans les composés de formule générale (Xa) à (Xk), peut varier de la stoechiométrie à 10 fois la stoechiométrie, la quantité préférée correspondant à 4 fois la stoechiométrie. L'utilisation de composés de formule générale (XIV) requiert l'usage de catalyseur métallique dont la quantité varié de 0,05 à 1 % en poids par rapport au poids de composé de formule générale (XIV). La quantité préférée est de 0,2 %, le catalyseur métallique préféré est l'acide hexachloroplatinique.

La suspension réactionnelle est portée entre 30 et 150 °C, la température préférée étant de 80 °C. La durée de réaction s'échelonne de 12 heures à 5 jours, la durée préférée étant de 24 heures.

La suspension est filtrée puis lavée avec un rapport 1/1 à 1/100 (poids/volume) de préférence d'environ 1 g pour 10 ml dans un solvant organique polaire dans lequel les dérivés de polysaccharides de formule (Xa) à (Xk) sont solubles. Le solvant préféré est le tétrahydrofurane. On élimine les composés (Xa) à (Xb) non réticulés. On obtient ainsi des matériaux supports consistant en des supports poreux commerciaux contenant un pourcentage des composés de formule générale (I) et (II) inférieur à 80 %.

L'invention concerne également un procédé de synthèse organique en phase hétérogène dans lequel la phase hétérogène est constituée d'un matériau support tel que défini plus haut.

La préparation de dérivés de polysaccharides de formule générale (Xa) à (Xk) est connue <u>per</u> <u>se</u> et a par exemple été décrite par Oliveros dans la demande

L'estérification de polysaccharides ainsi que l'obtention de carbamates et de thiocarbonates de polysaccharides sont réalisées respectivement par mise en réaction des polysaccharides avec des chlorures d'acides, des isocyanates et des isothiocyanates.

Un solvant inerte qui ne réagit pas avec les chlorures d'acides et les isocyanates est utilisé. La réaction est en général menée en présence d'un catalyseur comme une amine tertiaire, par exemple la 4-(N,N-diméthyl amino) pyridine, dans la réaction d'estérification, et une base de Lewis, par exemple une amine tertiaire, ou un acide de Lewis, par exemple un dérivé d'étain comme le dilaurate de dibutylétain, dans le cas de la réaction d'obtention des carbamates et des thiocarbamates.

Un mode d'obtention préféré consiste à conduire la réaction d'estérification ou d'obtention de carbamate dans un solvant organique de type base tertiaire comme la pyridine ou la quinoléine. Les chlorures d'acides ou les isocyanates préférés contiennent des groupements aryle, de type phényle en particulier, et peuvent être substitués, les substituants préférés étant les halogènes, et les groupements méthylène ou éthylène.

Les exemples suivants illustrent la présente invention mais n'en constituent nullement une limitation.

<u>EXEMPLE 1.</u>

On met en suspension 0,5 g de cellulose native (commercialisée par la société Merck), contenant 3,1 mM de motifs glucose, dans 15 $cm^3$ de toluène. Après déshydratation de la cellulose par distillation azéotropique jusqu'à

siccité, on ajoute 40 $cm^3$ de pyridine. Après distillation de 15 $cm^3$ de solvant et refroidissement, on ajoute 1,32 g de chlorure de 10-undécénoyle (6,5 mM). On chauffe au reflux pendant 1 heure et on effectue un prélèvement dont l'analyse (C = 67,55 % ; H = 9,27 %) montre que le degré de substitution est 1,8. On ajoute alors 0,850 g de 3,5-diméthylphénylisocyanate (5,6 mM) et on chauffe au reflux pendant une nuit. Après filtration à chaud sur verre fritté n° 2, le mélange réactionnel est versé dans 100 $cm^3$ de méthanol. Après filtration, le précipité est dissous dans le minimum de pyridine. La solution est filtrée sur verre fritté n° 2 et le filtrat est versé dans un mélange éthanol-eau (1/1 en volumes). Après filtration et lavage au méthanol, on obtient un produit dont les caractéristiques sont les suivantes :

- analyse élémentaire : C = 68,58 % : H = 8,67 % ; N = 2,12 %
- degré de substitution : 1,8 (undécénoyle), 0,9 (3,5-diméthylphénylcarbamate).

On obtient un composé de formule générale (Xd)
avec

$R_1$ =
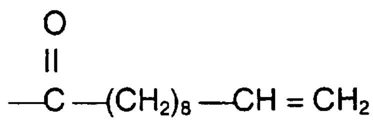

$R_2$ et $R_3$ =
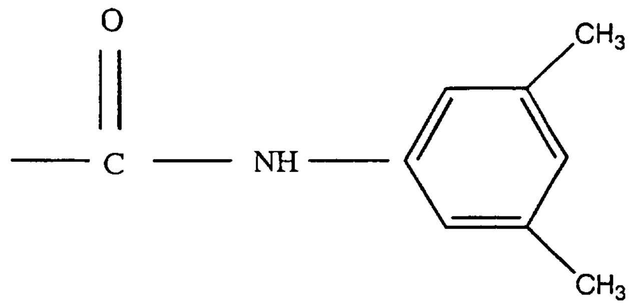

et

$$X_1 = X_2 = X_3 = \text{-O-}$$

Ce composé est référencé Xd-E1.
4 grammes de composé Xd-E1 sont dissous dans 80 ml d'oxyde de mésityle. La solution obtenue est conservée en l'état et divisée en 4 parties. Elle est référencée SOL(Xd-E1).
1 gramme de composé Xd-E1, soit 20 ml de la solution précédente SOL(Xd-E1), sont coulés sur une solution agitée et préalablement préparée de dodécylsulfate de sodium aqueuse à 0,7 % en poids et contenant 1 % en poids d'alcool polyvinylique de masse comprise entre 13 000 et 23 000. Les deux phases sont émulsionnées par agitation mécanique à 500 tours/minute à température ambiante pendant 30 minutes, puis la masse réactionnelle est portée à reflux de l'oxyde de mésityle. L'oxyde de mésityle est distillé lentement à pression ordinaire. Après refroidissement, la suspension est filtrée puis lavée à l'eau. La poudre est séchée. La polydispersité des billes obtenues est contrôlée en microscopie électronique à balayage. La taille est comprise entre 1 et 22 µm avec une majorité entre 8 et 18 µm.
Les billes obtenues précédemment sont mises en suspension dans 4 ml de toluène. On porte la masse réactionnelle à reflux du toluène et on ajoute 60 ml d'éthane dithiol et 10 mg de peroxyde de benzoyle. Le reflux est maintenu pendant 24 heures. 10 mg de peroxyde de benzoyle sont additionnés toutes les 3 heures. La suspension est refroidie, filtrée, puis lavée au tétrahydrofurane et à l'éthanol. Les billes sont séchées 24 heures à 60 °C sous vide.
Une colonne HPLC de 100 x 46 mm est ensuite remplie avec ces billes et la colonne est introduite dans un système HPLC. Un premier test est réalisé dans un mélange heptane/isopropanol 90/10. Les résultats obtenus sont présentés sur la figure 1.
Un second test est ensuite réalisé dans le chloroforme pur.

Soluté test : 2,2,2,-trifluoro-1-(9-anthryl)éthanol

Colonne 100 x 4,6 mm
Débit : 1 ml/mm
Détection U.V. 254 nm, To 1,2 mm

Les facteurs de capacité et le facteur de sélectivité obtenus sont les suivants :
k'1 = 14,7 - k'2 = 21,8 - $\alpha$ = 1,5 (voir figure 2).

EXEMPLE 2.

20 ml de la solution de l'exemple 1 contenant 1 g de composé Xd-E1 et référencée SOL(Xd-E1) est coulée sur une solution aqueuse agitée de dodécylsulfate de sodium à 1 % en poids et contenant 1,5 % en poids alcool polyvinylique de masse comprise entre 13 000 et 23 000. Les deux phases sont émulsionnées par agitation mécanique à 800 tours/minute à température ambiante pendant 30 minutes, puis la masse réactionnelle est portée à reflux de l'oxyde de mésityle. Ce dernier est évaporé à pression ordinaire. Après refroidissement, la suspension est filtrée et lavée à l'eau. La poudre est séchée. Le diamètre des billes est mesuré par granulométrie laser (Mastersizer Micro de Malvern). La répartition des diamètres est montrée sur la figure 3.
Les billes obtenues précédemment sont mises en suspension dans un mélange toluène/heptane 50/50 (4ml/4ml). 300 mg de tétraméthyldisilyléthylène sont additionnés ainsi que 50 mg d'acide hexachloroplatinique. Le milieu réactionnel est porté à reflux 48 heures. La suspension est refroidie, filtrée, puis lavée au tétrahydrofurane et à l'éthanol. Les billes sont séchées 24 heures à 60 °C sous vide.
Une colonne HPLC de 100 x 4,6 mm est ensuite remplie avec ces billes et la colonne est introduite dans un système HPLC. Une première série de tests est réalisée dans un mélange heptane/isopropanol/diéthylamine 90/10/0,1. Les résultats obtenus sont présentés sur la figure 4.
Un test est ensuite effectué sur l'indapamide dans le 1,2-dichloréthane pur à 80°C.
On obtient :
k'1 = 7,3 - k'2 = 9,7 - $\alpha$ = 1,3 (voir figure 5).

EXEMPLE 3.

20 ml de la solution de l'exemple 1, référencée SOL(Xd-E1) et contenant 1 g de composé Xd-E1 est coulée sur une solution aqueuse agitée de dodécylsulfate de sodium à 1 % en poids et contenant 1,5 % en poids d'alcool polyvinylique de masse comprise entre 13 000 et 23000. Les deux phases sont émulsionnées par agitation mécanique à 800 tours/minute pendant 30 minutes à température ambiante. La masse réactionnelle est ensuite portée à 50 °C et l'oxyde de mésityle évaporé sous vide de la trompe à eau (entre 10 et 50 mmHg) Après refroidissement, la suspension est filtrée et lavée à l'eau. La poudre est séchée.
Les billes obtenues précédemment sont mises en suspension dans un mélange toluène/heptane 50/50 (4ml/4ml) et la masse réactionnelle est portée à reflux pendant 5 jours. 10 mg de peroxyde de benzoyle sont additionnés toutes les 6 heures. La suspension est filtrée puis lavée au tétrahydrofurane et à l'éthanol. Les billes sont séchées 24 heures à 60 °C sous vide. L'aspect des billes est contrôlé en microscopie électronique à balayage (M.E.B.). Le diamètre des billes s'échelonne de 1 à 50 µm.
Une colonne HPLC de 100 x 4,6 mm est ensuite remplie avec les billes et la colonne est introduite dans un système HPLC. Une première série de tests est réalisée dans un mélange heptane/isopropanol 90/10 (voir figure 6).
Un second test est ensuite réalisé dans le chloroforme pur (voir résultats figure 7).

EXEMPLE 4.

20 ml de la solution référencée SOL(Xd-E1) de l'exemple 1 et correspondant à 1 g de composé Xd-E1 est mise sous agitation et 5 g de gel de silice de granulométrie 10 µm et de diamètre de pores 300 Å sont additionnés. La suspension est homogénéisée pendant 1 heure à température ambiante et l'oxyde de mésityle est évaporé à pression ordinaire. La poudre obtenue est séchée à 60 °C sous vide. Elle est ensuite reprise dans 40 ml d'un mélange heptane/toluène 50/50 et portée à reflux. 200 µl d'éthane dithiol sont additionnés et la masse réactionnelle est portée à reflux 48 heures. La suspension est filtrée et lavée au tétrahydrofurane puis à l'éthanol. La poudre est séchée (poids sec 6 g).
3 grammes de la poudre précédente sont portées dans une colonne HPLC 250 x 4,6 mm et la colonne est introduite dans un système HPLC.
Le test est effectué dans les conditions suivantes :

Soluté test : 2,2,2,-trifluoro-1-(9-anthryl)éthanol non racémique
Colonne : Xd-E1 - 250 x 4,6 mm

λ: 254 nm - D.O. = 0,1 - Débit = 1 ml/mn
Phase mobile : Chloroforme pur
Vitesse de défilement : 2 mm/mn

Les facteurs de capacité et le facteur de sélectivité obtenus sont les suivants :
k'1 = 2,0 - k'2 = 3,7 - α = 1,8

**Revendications**

1. Composé polymère réticulé en un réseau tridimensionnel **caractérisé en ce qu'**il comporte un radical de formule générale (I) ou (II)

$$-S-Y-A[CH_2-CH(R)-CH(R)-CH_2)_mA-Y-X- \quad (I)$$

$$-X-Y-A[CH_2-CH(R)-L-CH(R)-CH_2]_mA-Y-X- \quad (II)$$

où X représente un atome d'oxygène ou le groupement -NH, m est un nombre entier non nul au plus égal à 5, R représente un atome d'hydrogène ou un radical alkyle substitué ou non, linéaire ou ramifié, ayant de 1 à 8 atomes de carbone, Y représente un groupement -NH-CO-, un groupement -NH-CS- ou un groupement -CO-, A représente une simple liaison, un radical alkylène linéaire ou ramifié ayant de 1 à 21 atomes de carbone, un radical arylène ayant de 6 à 18 atomes de carbone ou un radical aralkylène ayant de 7 à 40 atomes de carbone, L représente un radical bis-thioéther, de formule générale (IIIa), bis-sulfoxyde, de formule générale (IIIb) ou bis-sulfone, de formule générale (IIIc), ou bis-silane, de formule générale (IV), ci-après :

$$-S-W_1-W_2-W_3-S- \quad (IIIa)$$

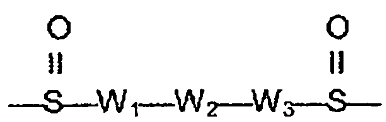

(IIIb)

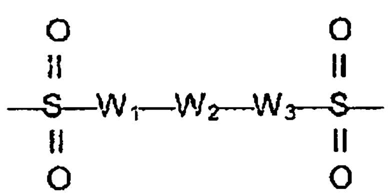

(IIIc)

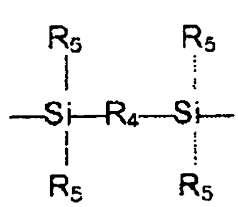

(IV)

où S représente un atome de soufre, O un atome d'oxygène et Si un atome de silicium et où

- $W_1$ et $W_3$ identiques ou différents, représentent chacun :

- un radical alkylène linéaire ou ramifié ayant de 1 à 21 atomes de carbone, un radical arylène ayant de 6 à 18 atomes de carbone, ou un radical aralkylène ayant de 7 à 40 atomes de carbone ;

- $W_2$ représente une simple liaison, $W_1$, un atome d'oxygène, un atome de soufre ou un diester symétrique de formule

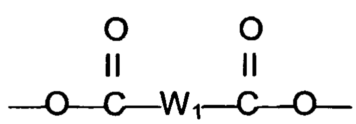

(V)

- $R_5$ représente un radical alkyle linéaire ou ramifié ayant de 1 à 5 atomes de carbone ou l'hydrogène, et $R_4$ représente le radical

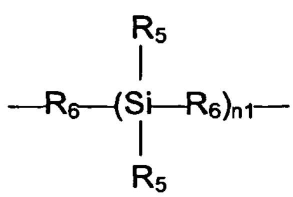

(VI)

où $R_6$ est $(CH_2)_{n2}$ ou l'oxygène et où n1 varie de 0 à 3 000 et n2 de 0 à 10, les radicaux arylènes contenus respectivement dans les radicaux de formules générales (I) et (II) pouvant être substitués par un ou plusieurs atomes ou radicaux, identiques ou différents, choisis parmi les atomes d'halogène, les radicaux alkyles contenant de 1 à 4 atomes de carbone, les radicaux alkoxy contenant de 1 à 4 atomes de carbone et les groupes nitro.

**2.** Composé polymère réticulé selon la revendication 1 **caractérisé en ce qu'**il est insoluble dans les solvants organiques polaires.

**3.** Composé polymère réticulé selon la revendication 1 ou 2, **caractérisé en ce que** les radicaux de formule générale (I) et (II) sont liés à des unités chirales osidiques d'un enchaînement linéaire, ramifié ou cyclique d'un dérivé de polysaccharide ou d'oligosaccharide selon les formules générales (VII) et (VIII) :

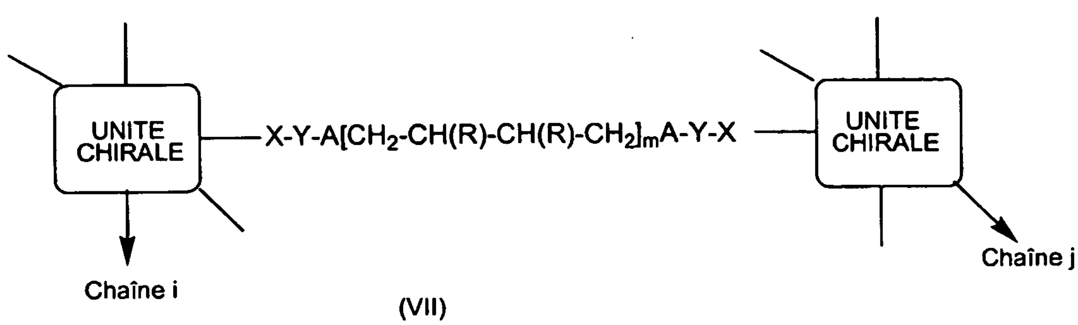


(VII)

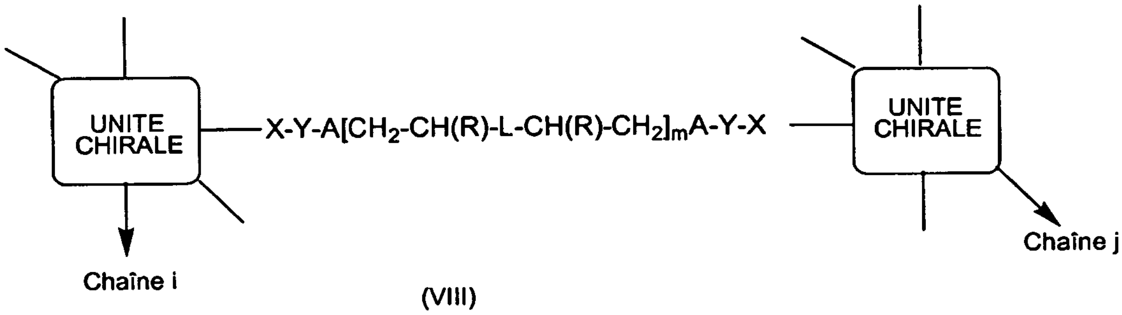

(VIII)

où X, Y, A, R, L et m ont chacun la même signification que dans la revendication 1 et le symbole de formule générale (IX)

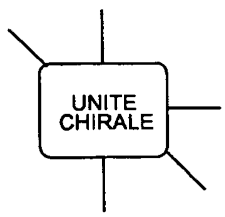

représente une unité chirale osidique d'un enchaînement linéaire, ramifié ou cyclique d'un dérivé de polysaccharide ou d'oligosaccharide, étant entendu que "chaîne i" et "chaîne j" symbolisent le fait que les unités chirales à chaque extrémité des radicaux de formule (I) et (II) sont situées sur des chaînes distinctes ou des enchaînements distincts d'unités osidiques, au sein du polysaccharide ou de l'oligosaccharide.

4. Composé polymère réticulé selon la revendication 3 **caractérisé en ce que** l'unité chirale osidique de formule générale (IX) correspond à au moins 1 unité osidique chirale d'un dérivé de polysaccharide ou d'oligosaccharide répondant à l'une des formules générales (Xa) à (Xk) :

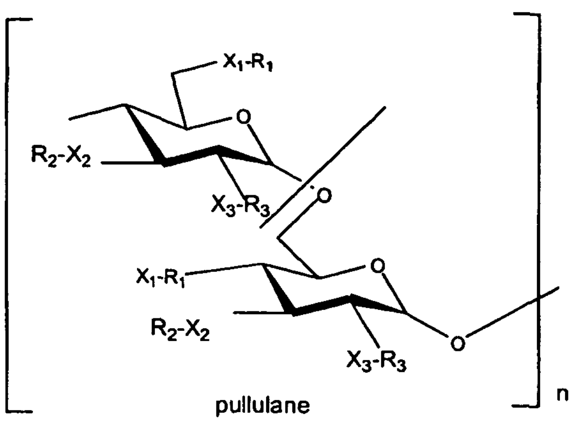

pullulane

(Xa)

(Xb)

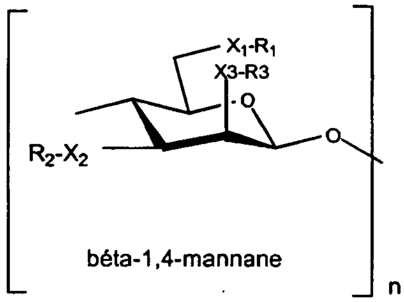

béta-1,4-mannane

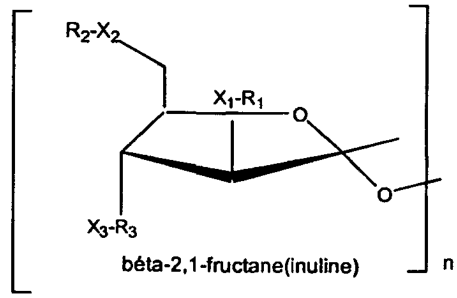

béta-2,1-fructane(inuline)

(Xc)

(Xd)

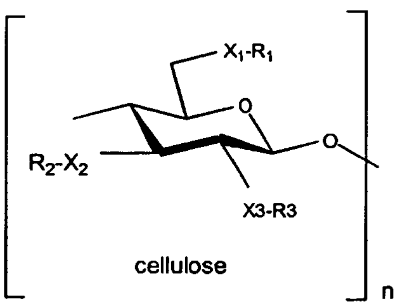

cellulose

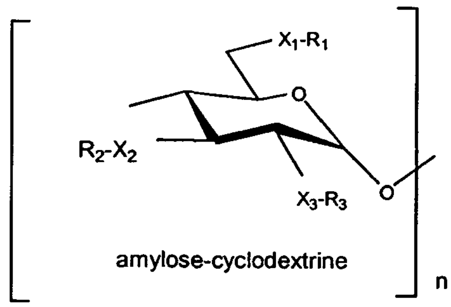

amylose-cyclodextrine

(Xe)

(Xf)

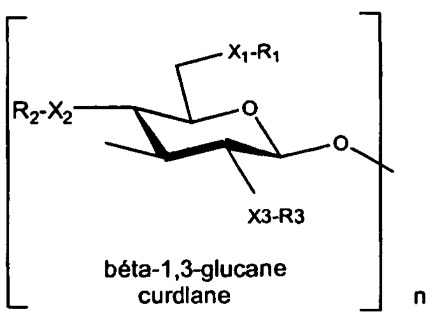

béta-1,3-glucane
curdlane

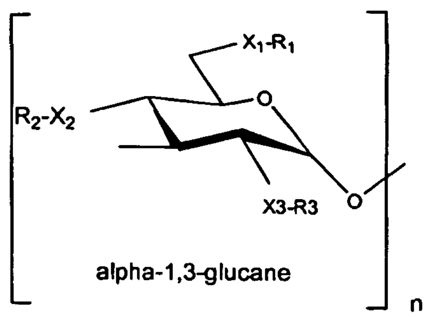

alpha-1,3-glucane

(Xg)

(Xh)

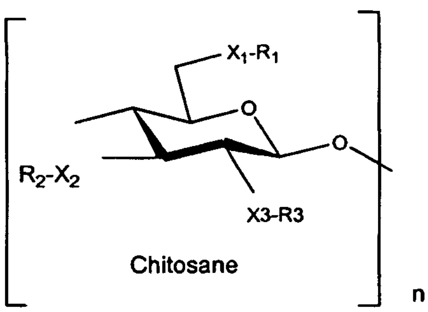

Chitosane

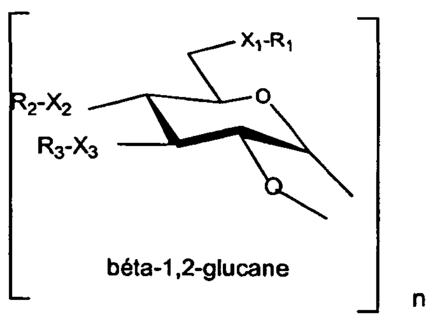

béta-1,2-glucane

(Xi)

(Xj) 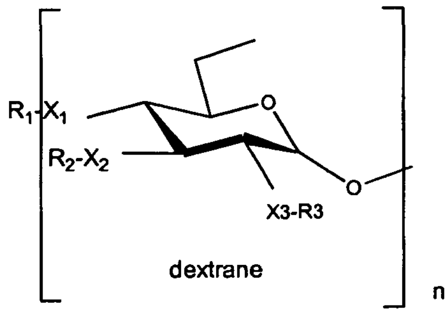 dextrane

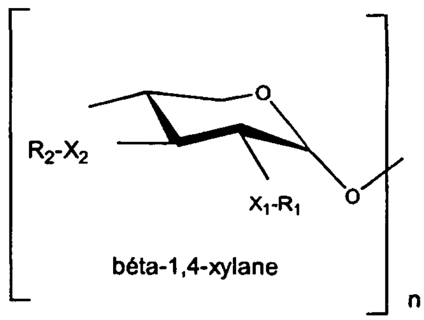 béta-1,4-xylane (Xk)

dans lesquelles :

a) les symboles $X_1$, $X_2$ et $X_3$, identiques ou différents, représentent chacun un atome d'oxygène ou le groupement -NH- ;

b) chacun des symboles $R_1$, $R_2$ et $R_3$ représentent indépendamment :

- un radical éthylénique ayant la formule générale

$$(CH\ [R] = CH-)_{m1}A\text{-}Y\text{-} \qquad (XI)$$

dans laquelle m1 est un nombre entier non nul au plus égal à 5, R représente un atome d'hydrogène ou un radical alkyle substitué ou non, linéaire ou ramifié ayant de 1 à 8 atomes de carbone, Y représente un groupement -NH-CO-, un groupement -NH-CS- ou un groupement -CO-, A représente une simple liaison, un radical alkylène linéaire ou ramifié ayant de 1 à 21 atomes de carbone, un radical arylène ayant de 6 à 18 atomes de carbone ou un radical aralkylène ayant de 7 à 40 atomes de carbone, et où X représente indifféremment $X_1$, $X_2$ ou $X_3$ ;

- ou un radical ayant la formule

$$A_2\text{-}A_1\text{-}CX_5\text{-} \qquad (XII)$$

dans laquelle $X_5$ représente un atome d'oxygène ou de soufre, $A_1$ représente une simple liaison ou un groupement -NH- et $A_2$ représente un radical aryle ayant de 6 à 24 atomes de carbone ou un radical aralkyle ayant de 7 à 36 atomes de carbone, un radical alkylaryle ayant de 7 à 18 atomes de carbone ;

- ou un atome d'hydrogène ou un groupe $NO_2$ ;

n étant un nombre entier compris entre 5 et 20 000,
étant entendu que dans chaque unité chirale osidique (Xa) à (Xk), l'un au moins des symboles $X_1$, $X_2$ et $X_3$ représente un atome d'oxygène, et que dans au moins une partie des unités osidiques chirales constituant une des chaînes du dérivé de polysaccharide, l'un au moins des symboles $R_1$, $R_2$ ou $R_3$ représente un radical de formule générale (XI) et l'un au moins des symboles $R_1$, $R_2$ ou $R_3$ représente un radical de formule générale (XII).

**5.** Composés polymères réticulés selon la revendication 4 **caractérisés en ce que** les composés de formule générale (VII) et (VIII) définis dans la revendication 3 sont obtenus par mise en réaction d'un dérivé de polysaccharide ou d'oligosaccharide sur lui-même ou sur un composé de formule générale :

$$HS\text{-}W_1\text{-}W_2\text{-}W_3\text{-}SH \qquad (XIII)$$

ou

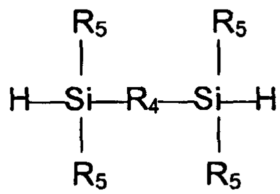

(XIV)

où S, Si, $W_1$, $W_2$, $W_3$, $R_4$ et $R_5$ ont la même signification que dans la revendication 1.

6. Composé polymère réticulé selon la revendication 5 **caractérisé en ce que** les composés de formules générales (VII) et (VIII) définis dans la revendication 3 sont obtenus par mise en réaction des radicaux éthyléniques de formule générale (XI) définis dans la revendication 4 avec les composés de formules générales (XIII) et (XIV) définis dans la revendication 5.

7. Composé polymère réticulé selon la revendication 3 **caractérisé en ce que** les unités chirales osidiques de formule générale (IX) sont situées sur des chaînes différentes ou des enchaînements osidiques distincts d'un dérivé de polysaccharide ou d'oligosaccharidedéfini dans la revendication 4.

8. Composé polymère réticulé selon l'une des revendications 1 à 7 **caractérisé en ce que** les radicaux de formules générales (IIIb) et (IIIc) sont obtenus par réaction d'oxydation des composés comportant les radicaux de formule générale (IIIa).

9. Composé polymère réticulé selon l'une des revendications 4 à 8 dans lequel les radicaux arylènes ou aryles contenus respectivement dans les radicaux de formule générale (XI) et (XII) sont substitués par un ou plusieurs atomes ou radicaux identiques ou différents choisis parmi les atomes d'halogène, les radicaux alkyles contenant de 1 à 4 atomes de carbone, les radicaux alkoxy contenant de 1 à 4 atomes de carbone et les groupes nitro.

10. Composé polymère réticulé selon la revendication 9 **caractérisé en ce que** les radicaux aryles sont des radicaux phényles ou naphtyles et/ou les radicaux arylènes sont des radicaux phénylènes ou naphtylènes.

11. Composé polymère réticulé selon l'une des revendications 4 à 10, **caractérisé en ce que** le degré de polymérisation est compris entre 5 et 2 000.

12. Composé polymère réticulé selon l'une des revendications 9 à 11, **caractérisé en ce qu'**il contient de 0,05 à 2,95 groupes de formule générale (XI) par unité structurale et de 0,05 à 2,95 groupes de formule générale (XII) par unité structurale.

13. Procédé de préparation d'un composé polymère réticulé selon les revendications 4 à 12 **caractérisé en ce que** l'on met en solution dans un solvant organique polaire au moins un dérivé activé de polysaccharide ou d'oligosaccharide défini dans la revendication 4 et l'on opère :

- soit par réaction des radicaux éthyléniques de formule générale (XI) sur eux-mêmes, par action d'un initiateur de radicaux libres, pour créer un réseau tridimensionnel entre les chaînes du dérivé de polysaccharide et **caractérisé en ce que** ce réseau contient un radical de formule générale (I) ;
- soit par réaction des radicaux éthyléniques de formule générale (XI) avec des composés bis-sulfydryles de formule générale (XIII); en présence d'initiateur de radicaux libres, pour créer un réseau tridimensionnel entre les chaînes du dérivé de polysaccharide et **caractérisé en ce que** ce réseau contient un radical de formule générale (II) et où le symbole (L) est représenté par un radical bis-thioéther de formule générale (IIIa), les radicaux de formule générale (IIIa) pouvant être subséquemment transformés en radicaux de formule générale (IIIb) ou (IIIc) par addition d'une quantité suffisante d'agent oxydant, par rapport à la quantité de soufre présente dans lesdits composés ;
- soit par réaction des radicaux éthyléniques de formule générale (XI) avec des composés bis-hydrogénosilanes de formule générale (IV), en présence d'un catalyseur métallique, pour créer un réseau tridimensionnel entre les chaînes du dérivé de polysaccharide et **caractérisé en ce que** ce réseau contient un radical de formule générale (II) et où le symbole (L) est représenté par un bis-silane de formule générale (IV).

**14.** Matériaux supports **caractérisés en ce qu'**ils contiennent essentiellement des composés selon l'une des revendications 1 à 12.

**15.** Matériaux supports selon la revendication 14 **caractérisés en ce qu'**ils sont sous forme de billes.

**16.** Matériaux supports selon la revendication 14 **caractérisés en ce qu'**ils contiennent un pourcentage inférieur à 80 % de composé polymère réticulé selon l'une des revendications 1 à 8.

**17.** Matériaux supports selon la revendication 16 **caractérisés en ce qu'**ils sont obtenus en partie à partir de supports poreux commerciaux de nature minérale ou organique.

**18.** Méthode de préparation de matériaux supports selon l'une des revendications 14 et 15 contenant essentiellement les composés polymères réticulés **caractérisée en ce que** un dérivé de polysaccharide ou d'oligosaccharide selon l'une des revendications 9 à 13 est mis en solution dans un solvant polaire organique puis précipité sous forme de billes, lesdites billes sont ensuite réticulées in situ par mise en réaction des radicaux éthyléniques de formule générale (XI) sur eux-mêmes ou par mise en réaction avec les composés de formule générale (XIII) ou (XIV), de manière à obtenir des billes de matériaux supports contenant essentiellement les composés polymères réticulés selon l'une des revendications 1 à 12.

**19.** Méthode de préparation de matériaux supports selon la revendication 15 sous forme de billes précipitées **caractérisée en ce que** l'on dissout un dérivé de polysaccharide ou d'oligosaccharide dans un solvant organique polaire et que la solution organique obtenue est coulée sur une solution aqueuse contenant un agent tensioactif anionique et un stabilisant d'émulsion et que l'émulsion obtenue est chauffée pour éliminer le solvant organique.

**20.** Méthode de préparation selon la revendication 19 **caractérisée en ce que** le solvant organique polaire est l'oxyde de mésityle, l'agent tensioactif anionique le sodium dodécyl sulfate et le stabilisant d'émulsion, un dérivé polyhydroxylé possédant un nombre d'atomes de carbone supérieur à 16.

**21.** Méthode de préparation selon l'une des revendications 19 et 20 **caractérisée en ce que** les billes ont une dimension comprise entre 0,1 et 300 µm et une surface spécifique de 10 à 100 $m^2$/g.

**22.** Méthode de préparation selon l'une des revendications 19 à 21 **caractérisée en ce que** les billes précipitées de dérivés de polysaccharides sont réticulées in situ par mise en réaction des radicaux éthyléniques de formule générale (XI) sur eux-mêmes, par action d'un initiateur de radicaux libres, ou par mise en réaction avec des composés de formule générale (XIII) ou (XIV), de manière que l'on obtienne les composés polymères réticulés sous forme de billes constituant un matériau support insoluble dans les solvants organiques polaires, et que les billes de matériau support aient une dimension comprise enter 0,1 µm à 300 µm et une surface spécifique de 10 à 100 $m^2$/g.

**23.** Méthode de préparation de matériaux supports selon l'une des revendications 16 et 17 **caractérisé en ce qu'**une solution de solvant organique contenant le dérivé de polysaccharide ou d'oligosaccharide est additionnée à un support poreux commercial pulvérulent, le milieu est chauffé pour évaporer le solvant, la poudre obtenue et contenant le dérivé de polysaccharide ou d'oligosaccharide est mise en suspension dans un solvant dans lesquels lesdits composés sont insolubles et le milieu est porté à reflux ; un agent réticulant comme un initiateur de radicaux libres ou un composé de formule générale (XIII) ou (XIV) est additionné ; après réaction, la suspension est filtrée et lavée dans un solvant organique polaire dans lequel les dérivés de polysaccharide ou d'oligosaccharide sont solubles pour éliminer ces derniers.

**24.** Méthode de préparation de matériaux supports selon la revendication 23 **caractérisée en ce que** les supports poreux commerciaux pulvérulents sont des oxydes minéraux ou du polystyrène-divinylbenzène et qu'ils possèdent un diamètre de particule compris entre 1 et 300 µm et un diamètre de pore compris entre 30 et 10 000 Å.

**25.** Utilisation d'un matériau support selon l'une des revendications 14 à 17 pour la préparation et la séparation d'énantiomères avec mise en oeuvre de moyens de chromatographie liquide ou gazeuse ou supercritique, ou des moyens d'électrophorèse ou d'électrochromatographie.

**26.** Utilisation d'un matériau support selon l'une des revendications 14 à 17, pour la préparation et la séparation d'énantiomères avec mise en oeuvre de moyens de chromatographie liquide ou supercritique utilisant les solvants organiques polaires.

**27.** Utilisation d'un composé polymère réticulé selon l'une des revendications 1 à 12 dans la composition de membranes de percolation.

**28.** Procédé de synthèse organique en phase hétérogène **caractérisé en ce que** la phase hétérogène est constituée d'un matériau support selon l'une des revendications 14 à 17.

**Patentansprüche**

**1.** In einem reidimensionalen Netzwerk vernetzte Polymer-Verbindung, **dadurch gekennzeichnet, dass** sie ein Radikal der allgemeinen Formel (I) oder (II) umfasst:

$$-X-Y-A[CH_2-CH(R)-CH(R)-CH_2)_mA-Y-X- \quad (I)$$

$$-X-Y-A[CH_2-CH(R)-L-CH(R)-CH_2]_mA-Y-X- \quad (II)$$

wobei X ein Sauerstoff-Atom oder die -NH Gruppe repräsentiert, m eine ganze Zahl ungleich Null bis höchstens 5 ist, R ein Wasserstoff-Atom oder ein substituiertes oder nicht substituiertes, lineares oder verzweigtes Alkyl-Radikal ist, welches von 1 bis 8 Kohlenstoff-Atome aufweist, Y eine -NH-CO- Gruppe, eine -NH-CS- Gruppe oder eine -CO- Gruppe repräsentiert, A eine einfache Verbindung, ein lineares oder verzweigtes Alkylen-Radikal, welches von 1 bis 21 Kohlenstoff-Atome aufweist, ein Arylen-Radikal, welches von 6 bis 18 Kohlenstoff-Atome aufweist, oder ein Aralkylen-Radikal, welches von 7 bis 40 Kohlenstoff-Atomen aufweist repräsentiert, L ein Bis-Thioether-Radikal der allgemeinen Formel (IIIa), Bis-Sulfoxid der allgemeinen Formel (IIIb) oder Bis-Sulfon der allgemeinen Formel (IIIc) oder Bis-Silan der allgemeinen Formel (IV) repräsentiert, welche folgen:

$$-S-W_1-W_2-W_3-S- \quad (IIIa)$$

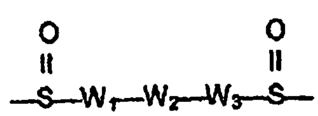

(IIIb)

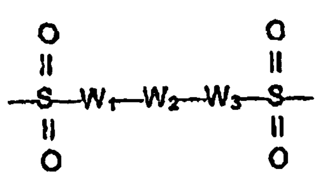

(IIIc)

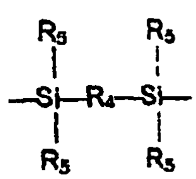

(IV)

wobei S ein Schwefel-Atom, O ein Sauerstoff-Atom und Si ein Silizium-Atom repräsentiert, und wobei

- $W_1$ und $W_3$, welche identisch oder unterschiedlich sind, jeweils repräsentieren:

- ein lineares oder verzweigtes Alkylen-Radikal, welches von 1 bis 21 Kohlenstoff-Atome aufweist, ein Arylen-Radikal, welches von 6 bis 18 Kohlenstoff-Atome aufweist, oder ein Aralkylen-Radikal, welches von 7 bis 40 Kohlenstoff-Atome aufweist;

- $W_2$ eine einfache Verbindung, $W_1$, ein Sauerstoff-Atom, ein Schwefel-Atom oder einen symmetrischen Di-Ester der Formel

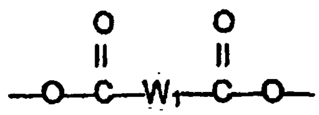

(V)

repräsentiert,

- $R_5$ ein lineares oder verzweigtes Alkyl-Radikal, welches von 1 bis 5 Kohlenstoff-Atome aufweist, oder Wasserstoff repräsentiert, und $R_4$ das Radikal

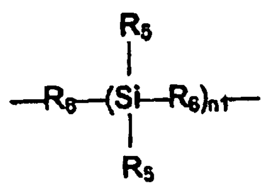

(VI)

repräsentiert, wobei $R_6$ $(CH_2)_{n2}$ oder Sauerstoff ist, und

wobei n1 von 0 bis 3000 variiert und n2 von 0 bis 10 variiert, wobei die jeweils in den Radikalen der allgemeinen Formeln (I) und (II) enthaltenen Arylen-Radikale mit einem oder mehreren identischen oder unterschiedlichen Atomen oder Radikalen substituiert werden können, welche aus den Wasserstoff-Atomen, den Alkyl-Radikalen, welche 1 bis 4 Kohlenstoff-Atome aufweisen, den Alkoxy-Radikalen, welche 1 bis 4 Kohlenstoff-Atome aufweisen, und den Nitro-Gruppen ausgewählt sind.

**2.** Vernetzte Polymer-Verbindung gemäß Anspruch 1, **dadurch gekennzeichnet, dass** sie in den polaren organischen Lösungsmitteln unlösbar ist.

**3.** Vernetzte Polymer-Verbindung gemäß Anspruch 1 oder 2, **dadurch gekennzeichnet, dass** die Radikale der allgemeinen Formeln (I) und (II) mit osidischen chiralen Einheiten einer linearen, verzweigten oder zyklischen Kette eines Polysacharid-Derivates oder eines Oligosacharid-Derivates gemäß der allgemeinen Formeln (VII) und (VIII):

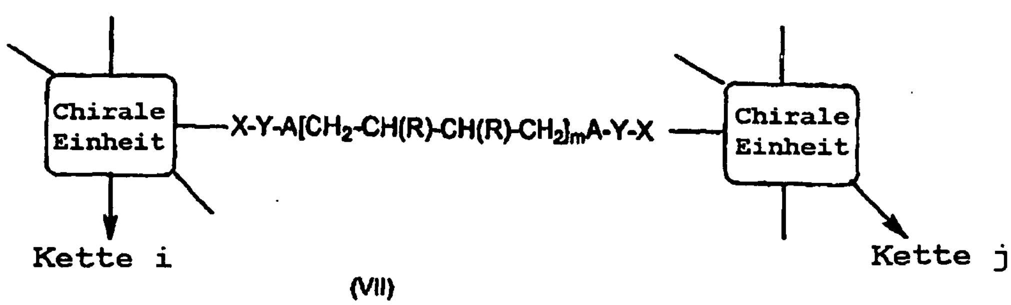

(VII)

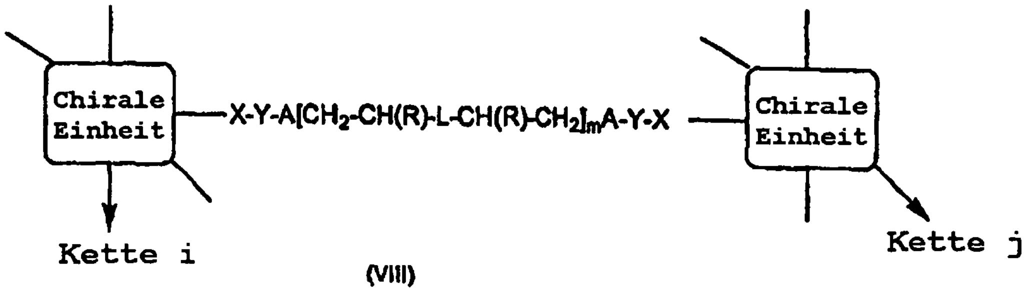


(VIII)

verbunden sind, wobei X, Y, A, R, L und m jeweils die gleiche Bedeutung haben wie in Anspruch 1, und wobei das Symbol der allgemeinen Formel (IX)

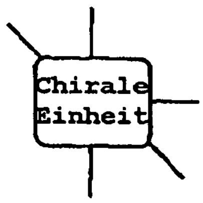


eine chirale, osidische Einheit einer linearen, verzweigten oder zyklischen Kette eines Polysacharid-Derivates oder eines Oligosacharid-Derivates repräsentiert, wobei "Kette i" und "Kette j" die Tatsache symbolisieren, dass die chiralen Einheiten an jedem Ende der Radikale der Formel (I) und (II) auf verschienenen Ketten oder auf Verkettungen verschiedener osidischer Einheiten mitten im Polysacharid oder Oligosacharid angeordnet sind.

**4.** Vernetzte Polymer-Verbindung gemäß Anspruch 3, **dadurch gekennzeichnet, dass** die chirale osidische Einheit der allgemeinen Formel (IX) wenigstens einer chiralen osidischen Einheit eines Polysacharid-Derivates oder Oligosacharid-Derivates zugeordnet ist, welche(s)| einer der allgemeinen Formeln (Xa) bis (Xk) genügt:

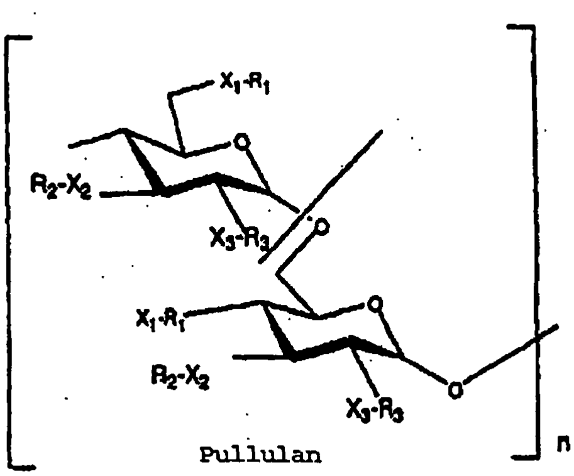

Pullulan

(Xa)

(Xb)

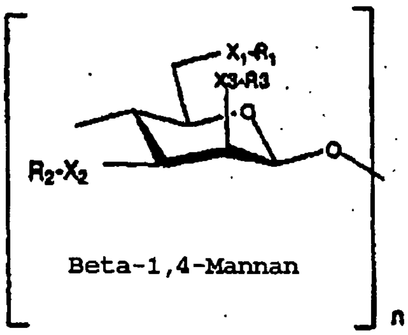

Beta-1,4-Mannan

(Xc)

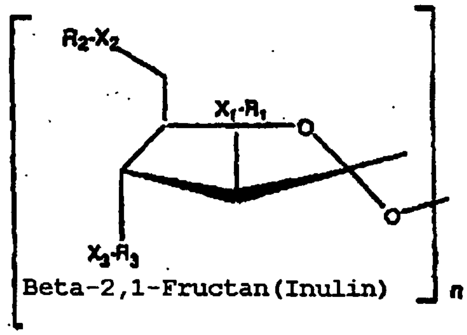

Beta-2,1-Fructan(Inulin)

(Xd)

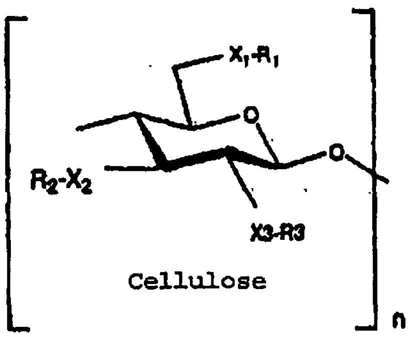

Cellulose

(Xe)

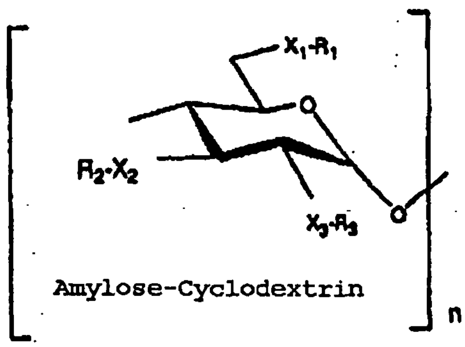

Amylose-Cyclodextrin

(Xf)

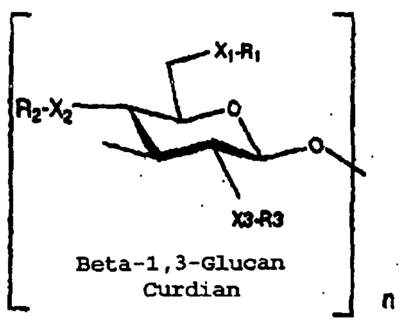

Beta-1,3-Glucan
Curdian

(Xg)

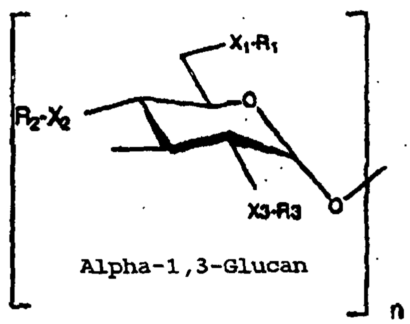

Alpha-1,3-Glucan

(Xh)

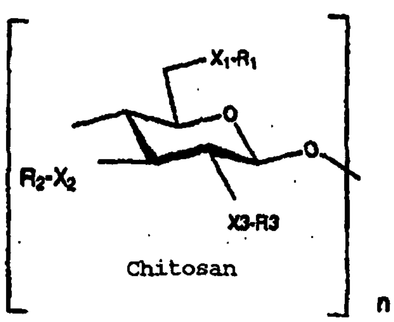

Chitosan

(Xi)

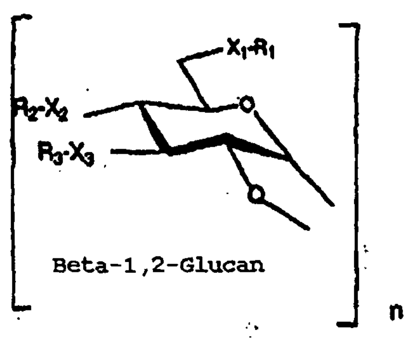

Beta-1,2-Glucan

(Xj) 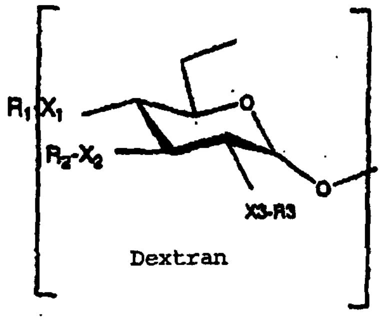 Dextran

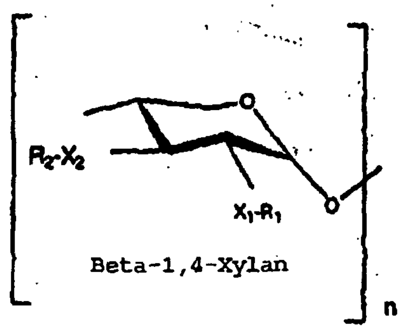 Beta-1,4-Xylan (Xk)

in welchen:

a) die Symbole $X_1$, $X_2$ und $X_3$, welche identisch oder verschieden sind, jeweils ein Sauerstoff-Atom oder die -NH- Gruppe repräsentieren;

b) jedes der Symbole $R_1$, $R_2$ und $R_3$ unabhängig voneinander repräsentiert: - ein Ethylen-Radikal, welches die allgemeine Formel

$$(CH\ [R] = CH-)_{m1}A-Y- \qquad (XI)$$

aufweist, in welcher ml eine ganze Zahl ungleich Null ist, welche höchstens gleich 5 ist, R ein Wasserstoff-Atom oder ein substituiertes oder nicht-substituiertes lineares oder verzweigtes Alkyl-Radikal repräsentiert, welches von 1 bis 8 Kohlenstoff-Atome aufweist, Y eine -NH-CO- Gruppe, eine -NH-CS- Gruppe oder eine -CO-Gruppe repräsentiert, A eine einfache Verbindung, ein lineares oder verzweigtes Alkylen-Radikal, welches von 1 bis 21 Kohlenstoff-Atome aufweist, ein Arylen-Radikal, welches von 6 bis 18 Kohlenstoff-Atome aufweist, oder ein Aralkylen-Radikal, welches von 7 bis 40 Kohlenstoff-Atome aufweist repräsentiert, und wobei X unterschiedslos $X_1$, $X_2$ oder $X_3$ repräsentiert;

- oder ein Radikal, welches die Formel $A_2$-$A_1$-$CX_5$- (XII) aufweist, in welcher $X_5$ ein Sauerstoff-Atom oder Schwefel-Atom repräsentiert, A1 eine einfache Verbindung oder eine -NH- Gruppe repräsentiert, und $A_2$ ein Aryl-Radikal, welches 6 bis 24 Kohlenstoff-Atome aufweist, oder ein Aralkyl-Radikal, welches 7 bis 36 Kohlenstoff-Atome aufweist, ein Alkylaryl-Radikal, welches 7 bis 18 Kohlenstoff-Atome aufweist repräsentiert;

- oder ein Wasserstoff-Atom oder eine $NO_2$ Gruppe;

wobei n eine ganze Zahl ist, welche zwischen 5 und 20 000 enthalten ist, wobei| in jeder chiralen osidischen Einheit (Xa) bis (Xk) wenigstens eines der Symbole $X_1$, $X_2$ und $X_3$ ein Sauerstoff-Atom repräsentiert, und in wenigstens einem Teil der chiralen osidischen Einheiten, welche Ketten aus Polysacharid-Derivat bilden, wenigstens eines der Symbole $R_1$, $R_2$ oder $R_3$ ein Radikal der allgemeinen Formel (XI) repräsentiert, und wenigstens eines der Symbole $R_1$, $R_2$ oder $R_3$ ein Radikal der allgemeinen Formel (XII) repräsentiert.

**5.** Vernetzte Polymer-Verbindungen gemäß Anspruch 4, **dadurch gekennzeichnet, dass** die in Anspruch 3 definierten Verbindungen der allgemeinen Formel (VII) und (VIII) durch Reagieren-Lassen eines Polysacharid-Derivates oder Oligosacharid-Derivates mit sich selber oder mit einer Verbindung der allgemeinen Formel

$$HS-W_1-W_2-W_3-SH \qquad (XIII)$$

oder

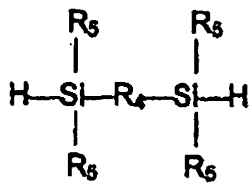

(XIV)

erhalten werden, wobei S, Si, $W_1$, $W_2$, $W_3$, $R_4$ und $R_5$ die gleiche Bedeutung haben wie in Anspruch 1.

**6.** Vernetzte Polymer-Verbindung gemäß Anspruch 5, **dadurch gekennzeichnet, dass** die in Anspruch 3 definierten Verbindungen der allgemeinen Formeln (VII) und (VIII) durch Reagieren-Lassen von in Anspruch 4 definierten Ethylen-Radikalen der allgemeinen Formel (XI) mit den in Anspruch 5 definierten Verbindungen der allgemeinen Formeln (XIII) und (XIV) erhalten werden.

**7.** Vernetzte Polymer-Verbindung gemäß Anspruch 3, **dadurch gekennzeichnet, dass** die chiralen osidischen Einheiten der allgemeinen Formel (IX) auf verschiedenen Ketten oder unterschiedlichen osidischen Verkettungen eines Polysacharid-Derivates oder Oligosacharid-Derivates angeordnet sind, wie in Anspruch 4 definiert.

**8.** Vernetzte Polymer-Verbindung gemäß einem der Ansprüche 1 bis 7, **dadurch gekennzeichnet, dass** die Radikale der allgemeinen Formeln (IIIb) und (IIIc) durch OxidationsReaktion der Verbindungen, welche die Radikale der allgemeinen Formel (IIIa) aufweisen, erhalten werden.

**9.** Vernetzte Polymer-Verbindung gemäß einem der Ansprüche 4 bis 8, wobei die in den Radikalen der allgemeinen Formel (XI) und (XII) enthaltenen Arylen-Radikale beziehungsweise Aryl-Radikale mit einem oder mehreren gleichen oder verschiedenen Atomen oder Radikalen substituiert werden, welche aus den Wasserstoff-Atomen, den Alkyl-Radikalen, welche von 1 bis 4 Kohlenstoff-Atome aufweisen, den Alkoxy-Radikalen, welche von 1 bis 4 Kohlenstoff-Atome aufweisen und den Nitro-Gruppen ausgewählt sind.

**10.** Vernetzte Polymer-Verbindung gemäß Anspruch 9, **dadurch gekennzeichnet, dass** die Aryl-Radikale die Phenyl-Radikale oder Naphtyl-Radikale sind, und/oder dass die Arylen-Radikale die Phenylen-Radikale oder Naphtylen-Radikale sind.

**11.** Vernetzte Polymer-Verbindung gemäß einem der Ansprüche 4 bis 10, **dadurch gekennzeichnet, dass** der Polymerisations-Grad zwischen 5 und 2000 enthalten ist.

**12.** Vernetzte Polymer-Verbindung gemäß einem der Ansprüche 9 bis 11, **dadurch gekennzeichnet, dass** sie von 0,05 bis 2,95 Gruppen der allgemeinen Formel (XI) pro Struktur-Einheit und von 0,05 bis 2,95 Gruppen der allgemeinen Formel (XII) pro Struktur-Einheit enthält.

**13.** Verfahren zum Herstellen einer vernetzten Polymer-Verbindung gemäß einem der Ansprüche 4 bis 12, **dadurch gekennzeichnet, dass** in einem polaren organischen Lösungsmittel wenigstens ein in Anspruch 4 definiertes aktives Polyscacharid-Derivat oder Oligoscacharid-Derivat gelöst wird, und dass hierauf eingewirkt wird:

- sei es mittels Reaktion der Ethylen-Radikale der allgemeinen Formel (XI) untereinander, mittels Einwirkens eines Initiators freier Radikale, zum Erzeugen eines dreidimensionalen Netzes zwischen den Ketten des Polysacharid-Derivates, und **dadurch gekennzeichnet, dass** das Netz ein Radikal der allgemeinen Formel (I) enthält;
- sei es mittels Reaktion von Ethylen-Radikalen der allgemeinen Formel (XI) mit Bi-Sulfydryl-Verbindungen der allgemeinen Formel (XIII); in Anwesenheit eines Initiators freier Radikale, zum Erzeugen eines dreidimensionalen Netzes zwischen den Ketten der Polysacharid-Derivate, und **dadurch gekennzeichnet, dass** das Netz ein Radikal der allgemeinen Formel (II) enthält, und wobei das Symbol (L) von einem Bis-Thio-Ether-Radikal der allgemeinen Formel (IIIa) repräsentiert wird, wobei die Radikale der allgemeinen Formel (IIIa) anschließend mittels Zufügen einer ausreichenden Menge Oxidations-Mittels, bezogen auf die in diesen Verbindungen vorhandene Menge an Schwefel, in Radikale der allgemeinen Formel (IIIb) oder (IIIc) umgewandelt werden können;
- sei es mittels Reaktion der Ethylen-Radikale der allgemeinen Formel (XI) mit Bis-Wasserstoff-Silan-Verbindungen der allgemeinen Formel (IV) in Anwesenheit eines metallischen Katalysators zum Erzeugen eines

dreidimensionalen Netzes zwischen den Ketten der Polysacharid-Derivate, und **dadurch gekennzeichnet, dass** dieses Netz ein Radikal der allgemeinen Formel (II) enthält, und wobei das Symbol (L) von einem Bis-Silan der allgemeinen Formel (IV) repräsentiert wird.

**14.** Trägermaterialien, **dadurch gekennzeichnet, dass** sie im Wesentlichen die Verbindungen gemäß einem der Ansprüche 1 bis 12 enthalten.

**15.** Trägermaterialien gemäß Anspruch 14, **dadurch gekennzeichnet, dass** sie in Form von Kugeln| vorliegen.

**16.** Trägermaterialien gemäß Anspruch 14, **dadurch gekennzeichnet, dass** sie einen Prozentsatz kleiner als 80% von vernetzter Polymer-Verbindung gemäß einem der Ansprüche 1 bis 8 enthalten.

**17.** Trägermaterialien gemäß Anspruch 16, **dadurch gekennzeichnet, dass** sie teilweise ausgehend von kommerziellen porösen Trägern mineralischer oder organischer Natur erhalten werden.

**18.** Verfahren zum Herstellen von Trägermaterialien gemäß einem der Ansprüche 14 und 15, im Wesentlichen die vernetzten Polymer-Verbindungen enthaltend, **dadurch gekennzeichnet, dass** ein Polysacharid-Derivat oder Oligosacharid-Derivat gemäß einem der Ansprüche 9 bis 13 in einem polaren organischen Lösungsmittel in Lösung gebracht und dann in Form von Kugeln ausgefällt wird, wobei diese Kugeln durch Reagieren-Lassen von Ethylen-Radikalen der allgemeinen Formel (XI) untereinander, oder durch Reagieren-Lassen mit den Verbindungen der allgemeinen Formel (XIII) oder (XIV) anschließend derart in-situ vernetzt werden, dass Kugeln von TrägerMaterialien erhalten werden, welche im Wesentlichen die vernetzten Polymer-Verbindungen gemäß einem der Ansprüche 1 bis 12 enthalten.

**19.** Verfahren zum Herstellen von Trägermaterialien gemäß Anspruch 15 in Form ausgefällter Kugeln, **dadurch gekennzeichnet, dass** ein Polysacharid-Derivat oder Oligosacharid-Derivat in einem polaren organischen Lösungsmittel aufgelöst wird, und dass die erhaltene organische Lösung auf eine wässrige Lösung fließen gelassen wird, welche ein tensioaktives anionisches Agens und einen Emulsions-Stabilisator aufweist, und dass die erhaltene Emulsion erwärmt wird, um das organische Lösungsmittel zu eliminieren.

**20.** Herstellungs-Verfahren gemäß Anspruch 19, **dadurch gekennzeichnet, dass** das polare organische Lösungsmittel Mesityloxid ist, dass das tensioaktive anionische Agens Natrium-Dodecylsulfat ist, und dass der Emulsions-Stabilisator ein polyhydroxyliertes Derivat ist, welches eine Anzahl von Kohlenstoff-Atomen größer als 16 aufweist.

**21.** Herstellungs-Verfahren gemäß einem der Ansprüche 19 und 20, **dadurch gekennzeichnet, dass** die Kugeln eine Größe wischen 0,1 und 300 µm und eine spezifische Oberfläche von 10 bis 100 $m^2/g$ aufweisen.

**22.** Herstellungs-Verfahren gemäß einem der Ansprüche 19 bis 21, **dadurch gekennzeichnet, dass** die ausgefällten Kugeln aus Polysacharid-Derivaten durch Reagieren-Lassen von Ethylen-Radikalen der allgemeinen Formel (XI) untereinander, unter Einwirken eines Freie-Radikale-Initiators oder mittels Reagieren-Lassen mit Verbindungen der allgemeinen Formel (XIII) oder (XIV) derart in-situ vernetzt werden, dass die vernetzten Polymer-Verbindungen in Form von Kugeln erhalten werden, welche ein in den polaren organischen Lösungsmitteln unlösliches Träger-Material bilden, und dass die Trägermaterial-Kugeln eine Größe, welche zwischen 0,1 µm und 300 µm enthalten ist, und eine spezifische Oberfläche von 10 bis 100$m^2/g$ aufweisen.

**23.** Verfahren zum Herstellen von Trägermaterialien gemäß einem der Ansprüche 16 und 17, **dadurch gekennzeichnet, dass** eine Lösung in organischem Lösungsmittel, welche das Polysacharid-Derivat oder Oligosacharid-Derivat enthält, einem pulverförmigen, porösen kommerziellen Träger zugefügt wird, wobei das Mittel erwärmt wird, um das Lösungsmittel zu verdampfen, wobei das erhaltene Pulver, welches das Polysacharid-Derivat oder Oligosacharid-Derivat enthält, in einem Lösungsmittel in Suspension gebracht wird, in welchem diese Verbindungen unlöslich sind, und wobei das Mittel einem Rückfluss unterworfen wird; wobei ein Vernetzungs-Agens, wie ein Initiator freier Radikale oder eine Verbindung der allgemeinen Formel (XIII) oder (XIV) zugefügt wird; wobei nach der Reaktion die Suspension filtriert und in einem polaren organischen Lösungsmittel, in welchem die Polysacharid-Derivate oder Oligosacharid-Derivate lösbar sind, gewaschen wird, um letztere zu entfernen.

**24.** Verfahren zum Herstellen von Trägermaterialien gemäß Anspruch 23, **dadurch gekennzeichnet, dass** die kommerziellen, pulverförmigen, porösen Träger mineralische Oxide oder Polystyren-Divinyl-Benzole sind, und dass sie einen Partikel-Durchmesser aufweisen, welcher zwischen 1 und 300 µm enthalten ist, und einen Poren-Durchmesser aufweisen, welcher zwischen 30 und 10 000 ? enthalten ist.

**25.** Verwendung eines Trägermaterials gemäß einem der Ansprüche 14 bis 17 zur Präparation und Trennung von Enantiomeren mittels Einsatz von Mitteln zur Flüssigkeits-Chromatographie, Gas-Chromatographie oder superkritischen Chromatographie, oder von Mitteln zur Elektrophorese oder Elektro-Chromatographie.

**26.** Verwendung eines Trägermaterials gemäß einem der Ansprüche 14 bis 17 zur Präparation und Trennung von Enantiomeren mittels Einsatz von Mitteln zur Flüssigkeits-Chromatographie oder superkritischen Chromatographie unter Verwendung der polaren organischen Lösungsmittel.

**27.** Verwendung einer vernetzten Polymer-Verbindung gemäß einem der Ansprüche 1 bis 12 für den Aufbau von Perkolations-Membranen.

**28.** Verfahren zur organischen Synthese in heterogener Phase, **dadurch gekennzeichnet, dass** die heterogene Phase von einem Träger-Material gemäß einem der Ansprüche 14 bis 17 gebildet wird.

## Claims

**1.** Cross-linked polymer compound in a three-dimensional network, **characterized in that** it contains a radical of general formula (I) or (II)

$$- X - Y - A\ [CH_2\text{-}CH(R)\text{-}CH(R)\text{-}CH_2]_m\ A - Y - X - \qquad (I)$$

$$- X - Y - A\ [CH_2\text{-}CH(R)\text{-}L\text{-}CH(R)\text{-}CH_2]_m\ A - Y - X - \qquad (II)$$

where X represents an oxygen atom or the group -NH, m is an integer other than zero equal at most to 5, R represents a hydrogen atom or a substituted or non-substituted, linear or branched alkyl radical having from 1 to 8 carbon atoms, Y represents a -NH-CO- group, a -NH-CS- group or a -CO- group, A represents a single bond, a linear or branched alkylene radical having from 1 to 21 carbon atoms, an arylene radical having from 6 to 18 carbon atoms or an aralkylene radical having from 7 to 40 carbon atoms, L represents a bis-thioether radical, of general formula (IIIa), a bis-sulphoxide radical of general formula (IIIb), or a bis-sulphone radical, of general formula (IIIc), or a bis-silane radical of general formula (IV), below:

$$\text{-S-}W_1\text{-}W_2\text{-}W_3\text{-S-} \qquad (IIIa)$$

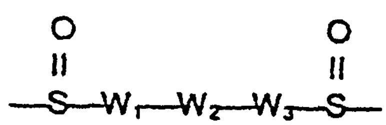

(IIIb)

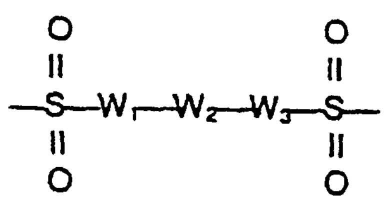

(IIIc)

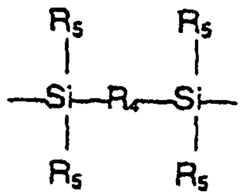

(IV)

where S represents a sulphur atom, O an oxygen atom and Si a silicon atom and where

- $W_1$ and $W_3$ identical or different, each represent:

  a linear or branched alkylene radical having from 1 to 21 carbon atoms, an arylene radical having from 6 to 18 carbon atoms, or an aralkylene radical having from 7 to 40 carbon atoms;

- $W_2$ represents a single bond, $W_1$ an oxygen atom, a sulphur atom or a symmetrical diester of formula

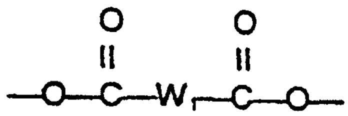

(V)

- $R_5$ represents a linear or branched alkyl radical having from 1 to 5 carbon atoms or hydrogen, and $R_4$ represents the radical

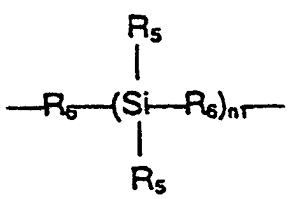

(VI)

  where $R_6$ is $(CH_2)_{n2}$ or oxygen and where n1 varies from 0 to 3000 and n2 from 0 to 10, the arylene radicals contained respectively in the radicals of general formulae (I) and (II) being able to be substituted by one or more atoms or radicals, identical or different, chosen from halogen atoms, alkyl radicals containing from 1 to 4 carbon atoms, alkoxy radicals containing from 1 to 4 carbon atoms and nitro groups.

**2.** Cross-linked polymer compound according to claim 1, **characterized in that** it is insoluble in polar organic solvents.

**3.** Cross-linked polymer compound according to claim 1 or 2, **characterized in that** the radicals of general formulae (I) and (II) are bound to osidic chiral units of a linear, branched or cyclic linkage of a polysaccharide or oligosaccharide derivative according to the general formulae (VII) and (VIII):

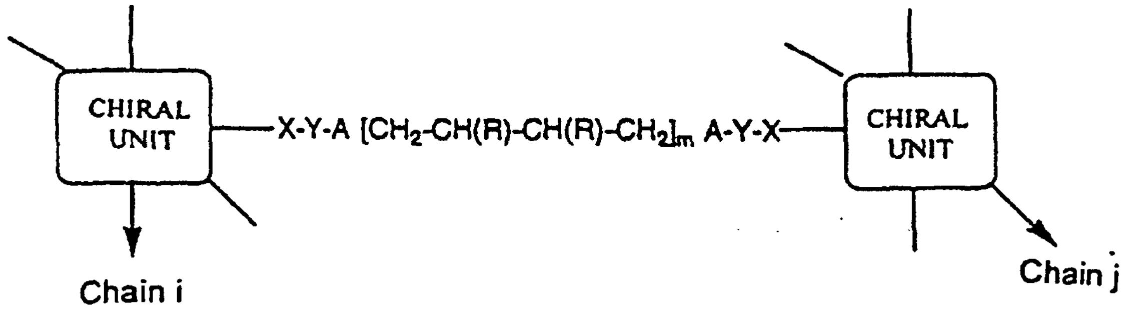

(VII)

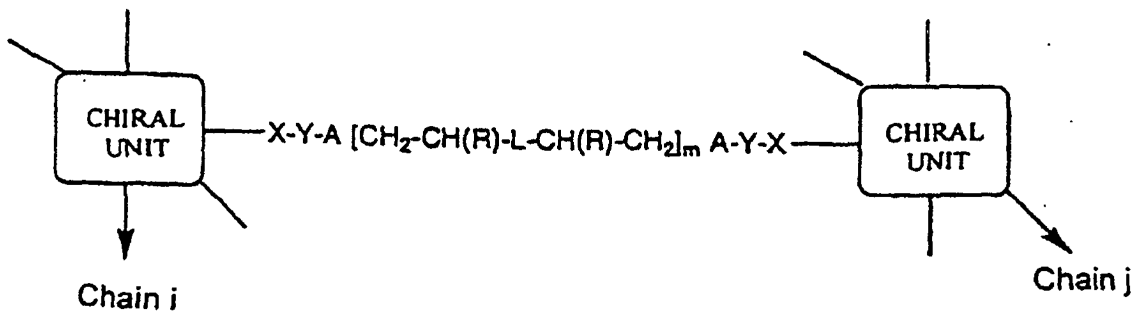

(VIII)

where X, Y, A, R, L and m each have the same meaning as in claim 1 and the general formula symbol (IX)

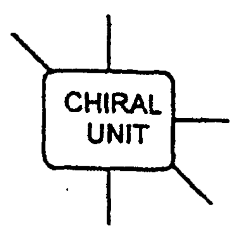

represents an osidic chiral unit of a linear, branched or cyclic linkage of a polysaccharide or oligosaccharide derivative, it being understood that "chain i" and "chain j" symbolize the fact that the chiral units at each end of the radicals of formulae (I) and (II) are situated on separate chains or separate linkages of osidic units, within the polysaccharide or the oligosaccharide.

4. Cross-linked polymer compound according to claim 3, **characterized in that** the osidic chiral unit of general formula (IX) corresponds to at least 1 chiral osidic unit of a polysaccharide or oligosaccharide derivative according to one of the general formulae ($X_a$) to ($X_k$) :

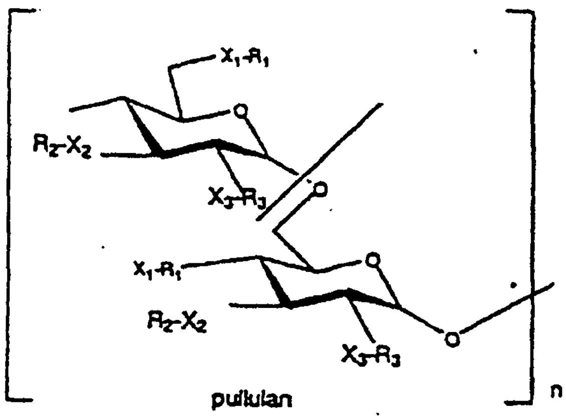

pullulan

(Xa)

(Xb)

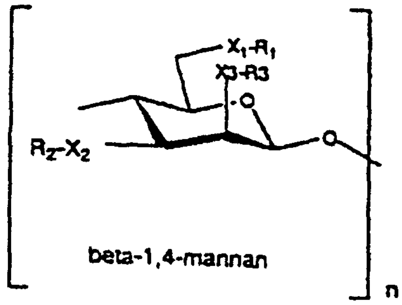

beta-1,4-mannan

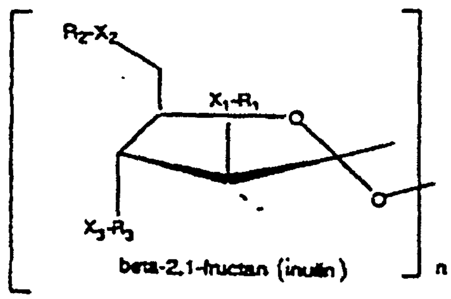

beta-2,1-fructan (inulin)

(Xc)

(Xd)

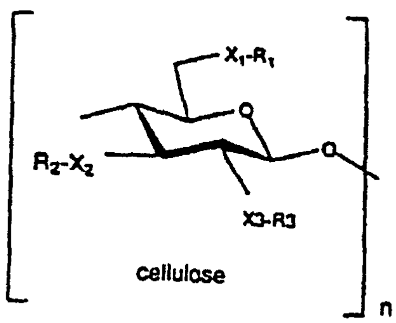

cellulose

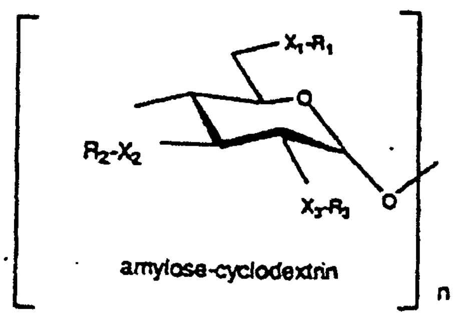

amylose-cyclodextrin

(Xe)

(Xf)

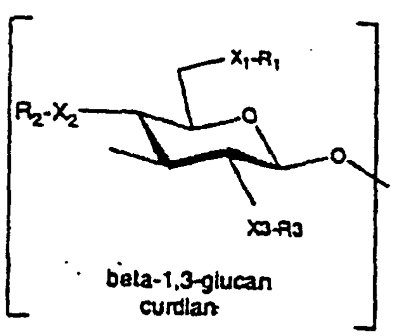

beta-1,3-glucan
curdlan

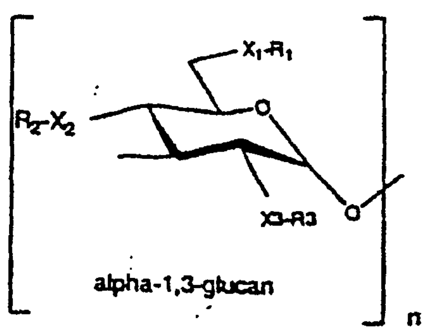

alpha-1,3-glucan

(Xg)

(Xh) 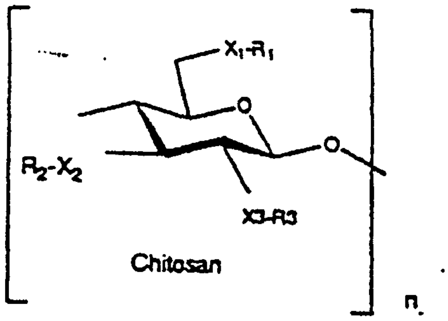

Chitosan

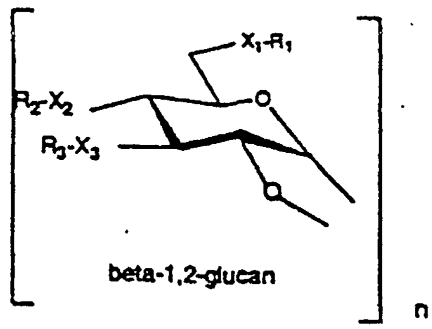 (Xi)

beta-1,2-glucan

(Xj) 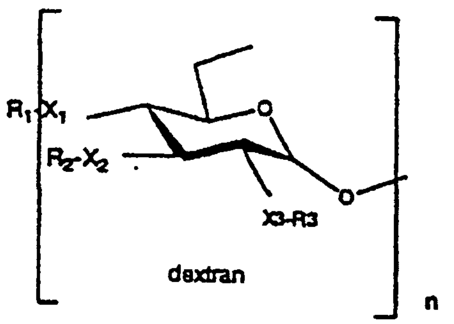

dextran

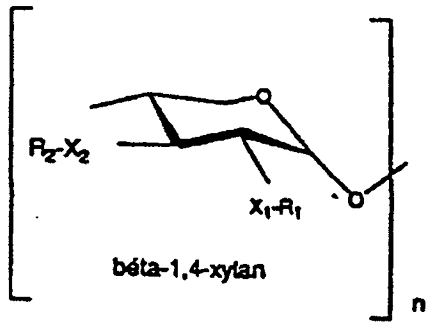 (Xk)

béta-1,4-xylan

in which:

a) the symbols $X_1$, $X_2$ and $X_3$, identical or different, each represent an oxygen atom or the group -NH-;

b) each of the symbols $R_1$, $R_2$ and $R_3$ independently represent:

- an ethylene radical having the general formula:

$$(CH [R] =CH-)_{m1}A-Y-$$

in which ml is an integer other than zero equal at most to 5, R represents a hydrogen atom or a substituted or non-substituted, linear or branched alkyl radical, having from 1 to 8 carbon atoms, Y represents a single bond, a -NH-CO- group, a -NH-CS- group or a -CO- group, A represents a single bond, a linear or branched alkylene radical having from 1 to 21 carbon atoms, an arylene radical having from 6 to 18 carbon atoms or an aralkylene radical having from 7 to 40 carbon atoms, and where X represents $X_1$, $X_2$ or $X_3$ equally;

- or a radical having the formula $A_2$-$A_1$-$CX_5$-

in which $X_5$ represents an oxygen or sulphur atom, $A_1$ represents a single bond or an -NH- group and $A_2$ represents an aryl radical having from 6 to 24 carbon atoms or an aralkyl radical having from 7 to 36 carbon atoms, an alkylaryl radical having from 7 to 18 carbon atoms;

- or a hydrogen atom or an $NO_2$ group;
n being an integer between 5 and 20 000,
it being understood that in each osidic chiral unit (Xa) to (Xk), at least one of the symbols $X_1$, $X_2$ and $X_3$ represents an oxygen atom, and that, in at least one part of the chiral osidic units constituting one of the chains of the polysaccharide derivative, at least one of the symbols $R_1$, $R_2$ and $R_3$ represents a radical of general formula (XI) and at least one of the symbols $R_1$, $R_2$ or $R_3$ represents a radical of general formula (XII).

**5.** Cross-linked polymer compounds according to claim 4, **characterized in that** the compounds of general formulae (VII) and (VIII) defined in claim 3 are obtained by reaction of a polysaccharide or oligosaccharide derivative itself or on a compound of general formula:

$$HS\text{-}W_1\text{-}W_2\text{-}W_3\text{-}SH \qquad (XIII)$$

or

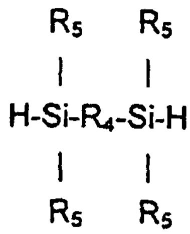

(XIV)

where S, Si, $W_1$, $W_2$, $W_3$, $R_4$ and $R_5$ have the same meaning as in claim 1.

**6.** Cross-linked polymer compound according to claim 5, **characterized in that** the compounds of general formulae (VII) and (VIII) defined in claim 3 are obtained by reaction of ethylene radicals of general formula (XI) defined in claim 4 with the compounds of general formulae (XIII) and (XIV) defined in claim 5.

**7.** Cross-linked polymer compound according to claim 3, **characterized in that** the osidic chiral units of general formula (IX) are situated on different chains or separate osidic linkages of a polysaccharide or oligosaccharide derivative according to claim 4.

**8.** Cross-linked polymer compound according to one of claims 1 to 7, **characterized in that** the radicals of general formulae (IIIb) and (IIIc) are obtained by oxidation reaction of the compounds containing the radicals of general formula (IIIa).

**9.** Cross-linked polymer compound according to anyone of claims 4 to 8 in which the arylene or aryl radicals contained respectively in the radicals of general formulae (XI) and (XII) are substituted by one or more atoms or radicals, identical or different, chosen from halogen atoms, alkyl radicals containing from 1 to 4 carbon atoms, alkoxy radicals containing from 1 to 4 carbon atoms and nitro groups.

**10.** Cross-linked polymer compound according to claim 9 **characterized in that** the aryl radicals are phenyl or naphthyl radicals and/or the arylene radicals are phenylene or naphthylene radicals.

**11.** Cross-linked polymer compound according to one of claims 4 to 10 **characterized in that** the degree of polymerization is between 5 and 2000.

**12.** Cross-linked polymer compound according to one of claims 9 to 11 **characterized in that** it contains from 0.05 to 2.95 groups of general formula (XI) per structural unit and from 0.05 to 2.95 groups of general formula (XII) per structural unit.

**13.** Process for preparing a cross-linked polymer compound according to claims 4 to 12 **characterized in that** there is dissolved in a polar organic solvent at least one activated polysaccharide or oligosaccharide derivative according to claim 4 and the procedure comprises:

- either reaction of the ethylene radicals of general formula (XI) on themselves, by action of a free radical initiator, in order to create a three-dimensional network between the chains of the polysaccharide derivative and **characterized in that** this network contains a radical of general formula (I);
- or reaction of the ethylene radicals of general formula (XI) with bis-sulphydryl compounds of general formula

(XIII), in the presence of a free radical initiator, in order to create a three-dimensional network between the chains of the polysaccharide derivative and **characterized in that** this network contains a radical of general formula (II) and where the symbol (L) is represented by a bis-thioether radical of general formula (IIIa), the radicals of general formula (IIIa) being able to be subsequently transformed into radicals of general formula (IIIb) or (IIIc) by addition of a sufficient quantity of oxidizing agent, relative to the quantity of sulphur present in the said compounds;

- or reaction of the ethylene radicals of general formula (XI) with bis-hydrogenosilane compounds of general formula (IV), in the presence of a metal catalyst, in order to create a three-dimensional network between the chains of the polysaccharide derivative and **characterized in that** this network contains a radical of general formula (II) and where the symbol (L) is represented by a bis-silane of general formula (IV).

**14.** Support materials, **characterized in that** they contain essentially compounds according to one of claims 1 to 12.

**15.** Support materials according to claim 14 **characterized in that** they are in the form of beads.

**16.** Support materials according to claim 14 **characterized in that** they contain a percentage of less than 80% of cross-linked polymer compound according to one of claims 1 to 8.

**17.** Support materials according to claim 16, **characterized in that** they are obtained from mineral or organic commercial porous supports.

**18.** Method of preparing support materials according to one of claims 14 and 15 and containing essentially cross-linked polymer compounds, **characterized in that** a polysaccharide or oligosaccharide derivative according to one of claims 9 to 13 is dissolved in an organic polar solvent then precipitated in the form of beads, the said balls are then cross-linked in situ by reaction of the ethylene radicals of general formula (XI) on themselves or by reaction with the compounds of general formula (XIII) or (XIV), so as to obtain beads of support materials containing essentially the cross-linked polymer compounds according to one of claims 1 to 12.

**19.** Method of preparing support materials according to claim 15 in the form of precipitated beads, **characterized in that** a polysaccharide or oligosaccharide derivative is dissolved in a polar organic solvent and that the organic solution obtained is poured onto an aqueous solution containing an anionic surfactant and an emulsion stabilizer and that the emulsion obtained is heated in order to eliminate the organic solvent.

**20.** Method of preparation according to claim 19, **characterized in that** the polar organic solvent is mesityl oxide, the anionic surfactant is sodium dodecyl sulphate and the emulsion stabilizer is a polyhydroxylated derivative possessing a number of carbon atoms greater than 16.

**21.** Method of preparation according to one of claims 19 and 20, **characterized in that** the beads have a dimension of between 0.1 and 300 μm and a specific surface area of 10 to 100 $m^2$/g.

**22.** Method of preparation according to one of claims 19 to 21, **characterized in that** the precipitated beads of polysaccharides derivatives are cross-linked in situ by reaction of the ethylene radicals of general formula (XI) on themselves, by action of a free radical initiator, or by reaction with compounds of general formula (XIII) or (XIV), so that cross-linked polymer compounds are obtained in the form of balls constituting a support material which is insoluble in polar organic solvents, and the beads of support material have a dimension of between 0.1 and 300 μm and a specific surface area of 10 to 100 $m^2$/g.

**23.** Method of preparing support materials according to one of claims 16 and 17 **characterized in that** a solution of organic solvent containing the polysaccharide or oligosaccharide derivative is added to a powdery commercial porous support, the medium is heated in order to evaporate the solvent, the powder obtained and containing the polysaccharide or oligosaccharide derivative is suspended in a solvent in which the said compounds are insoluble and the medium is refluxed; a cross-linking agent such as a free radical initiator or a compound of general formula (XIII) or (XIV) is added; after reaction, the suspension is filtered and washed in a polar organic solvent in which the polysaccharide or oligosaccharide derivatives are soluble in order to eliminate these latter.

**24.** Method or preparing support materials according to claim 23, **characterized in that** the powdery commercial porous supports are mineral oxides or polystyrene-divinyl benzene and they possess a particle diameter of between

1 and 300 µm and a pore diameter of between 30 to 10 000 Å.

**25.** Use of a support material according to one of claims 14 to 17 for the preparation and separation of enantiomers employing means of liquid or gaseous or supercritical chromatography, or means of electrophoresis or electrochromatography.

**26.** Use of a support material according to one of claims 14 to 17 for the preparation and separation of enantiomers employing means of liquid or gaseous or supercritical chromatography using polar organic solvents.

**27.** Use of a cross-linked polymer compound according to one of claims 1 to 12 in the composition of percolation membranes.

**28.** Process of organic synthesis in heterogeneous phase, **characterized in that** the heterogeneous phase is comprised of a support material according to one of claims 14 to 17.

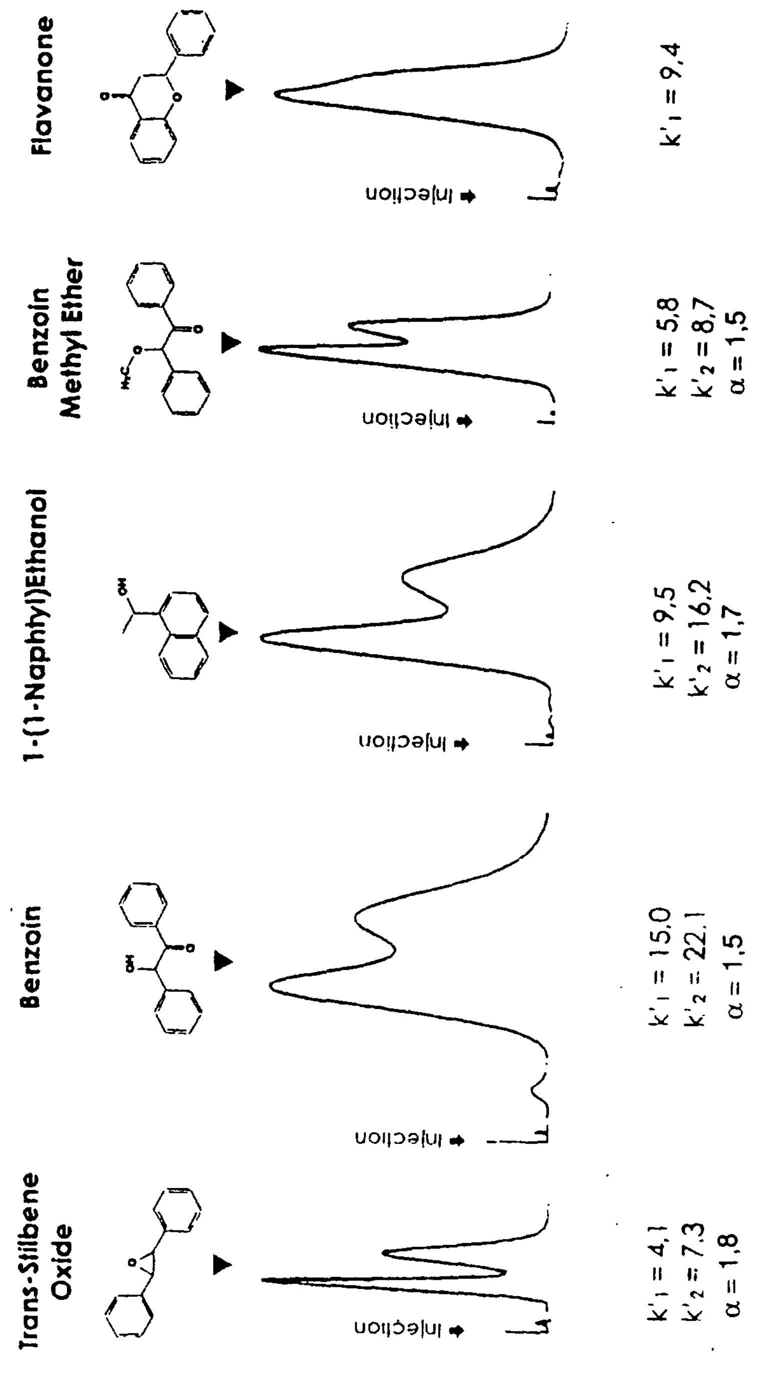
Trans-Stilbene Oxide
Injection
k'1 = 4,1
k'2 = 7,3
α = 1,8
Benzoin
Injection
k'1 = 15,0
k'2 = 22,1
α = 1,5
1-(1-Naphthyl)Ethanol
Injection
k'1 = 9,5
k'2 = 16,2
α = 1,7
Benzoin Methyl Ether
Injection
k'1 = 5,8
k'2 = 8,7
α = 1,5
Flavanone
Injection
k'1 = 9,4

Fig. 1

2,2,2-Trifluoro-1-(9-anthryl)éthanol
(non racemic)

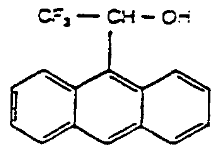

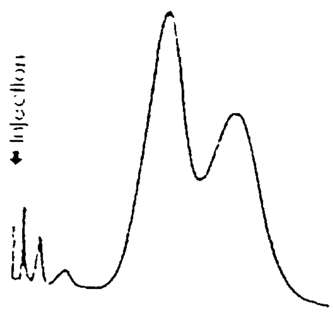

Fig. 2

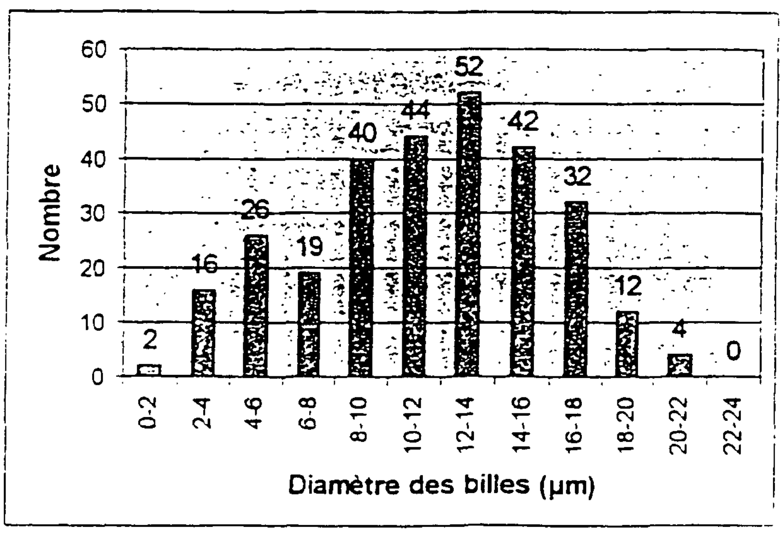


Fig. 3

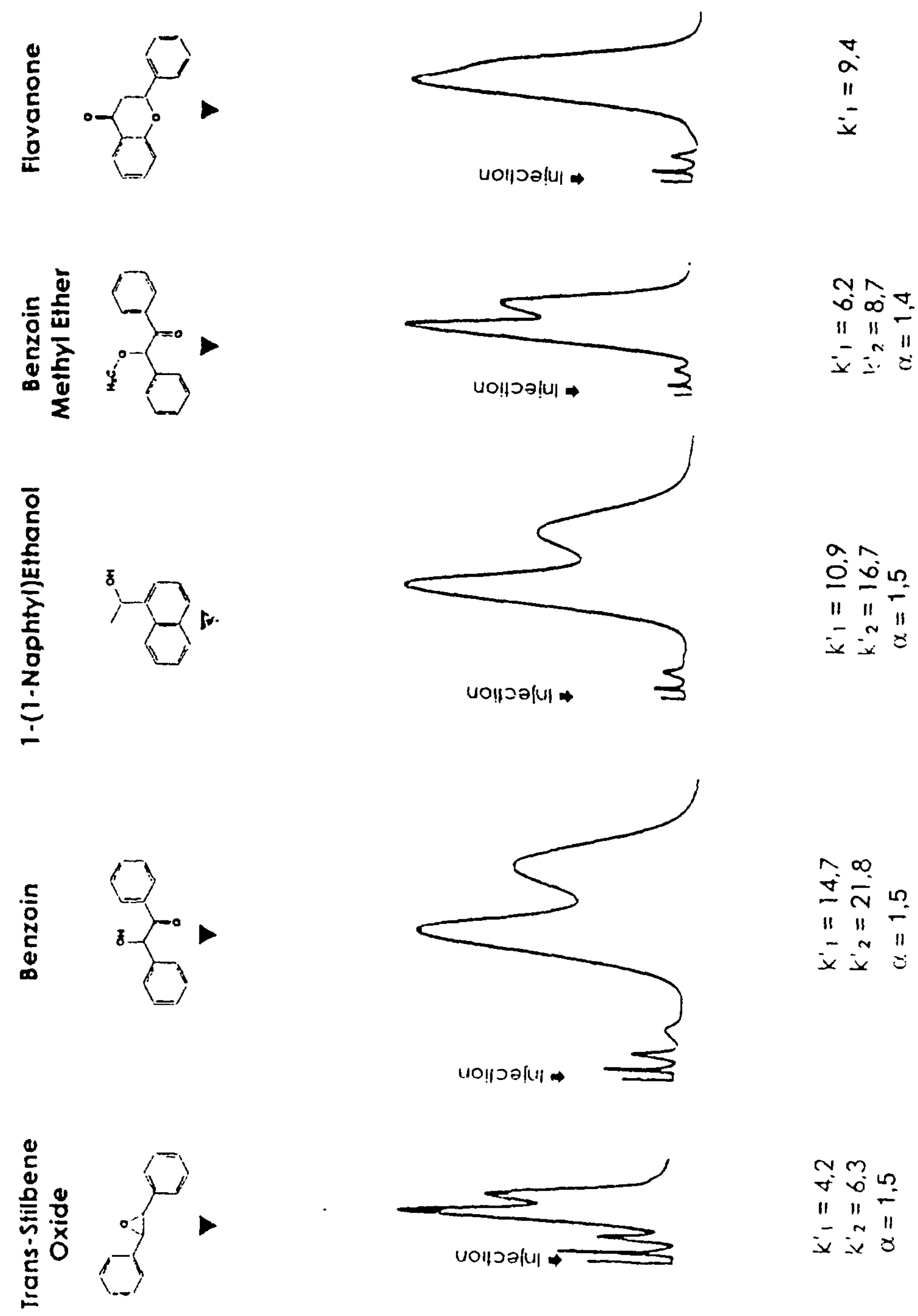
Trans-Stilbene Oxide
Injection
$k'_1 = 4,2$
$k'_2 = 6,3$
$\alpha = 1,5$
Benzoin
Injection
$k'_1 = 14,7$
$k'_2 = 21,8$
$\alpha = 1,5$
1-(1-Naphtyl)Ethanol
Injection
$k'_1 = 10,9$
$k'_2 = 16,7$
$\alpha = 1,5$
Benzoin Methyl Ether
Injection
$k'_1 = 6,2$
$k'_2 = 8,7$
$\alpha = 1,4$
Flavanone
Injection
$k'_1 = 9,4$

Fig. 4

INDAPAMIDE

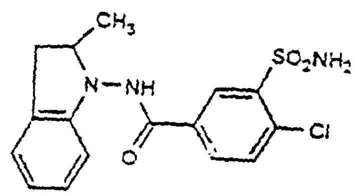

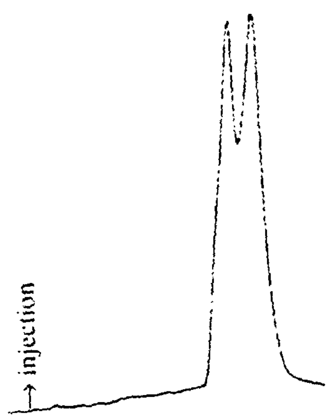


Fig. 5

Trans-Stilbene Oxide | Benzoin | 1-(1-Naphtyl)Ethanol | Benzoin Methyl Ether | Flavanone

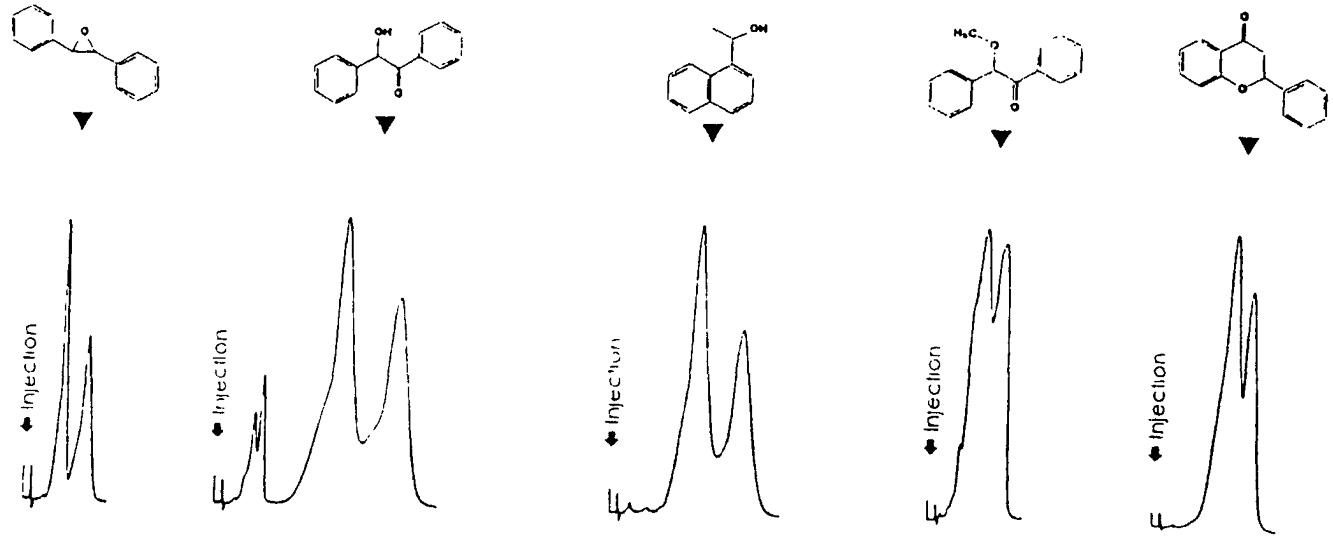


Trans-Stilbene Oxide: $k'_1 = 3,8$; $k'_2 = 6,6$; $\alpha = 1,8$

Benzoin: $k'_1 = 14,2$; $k'_2 = 20,6$; $\alpha = 1,4$

1-(1-Naphtyl)Ethanol: $k'_1 = 9,2$; $k'_2 = 14,4$; $\alpha = 1,6$

Benzoin Methyl Ether: $k'_1 = 4,9$; $k'_2 = 7,2$; $\alpha = 1,5$

Flavanone: $k'_1 = 8,2$; $k'_2 = 10,2$; $\alpha = 1,2$

Fig. 6

2,2,2-Trifluoro-1-(9-anthryl)éthanol
(non racemic)

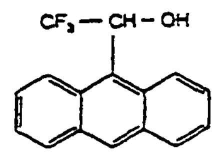

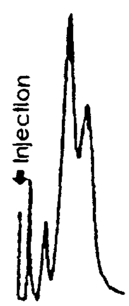


$k'_1 = 4,2$
$k'_2 = 6,3$
$\alpha = 1,5$

Fig. 7